(19) Europäisches Patentamt
European Patent Office
Office européen des brevets

(11) EP 4 685 517 A1

(12) **EUROPEAN PATENT APPLICATION**

(43) Date of publication:
**28.01.2026 Bulletin 2026/05**

(21) Application number: **25189181.8**

(22) Date of filing: **11.07.2025**

(51) International Patent Classification (IPC):
***G01S 7/4863*** *(2020.01)* ***G01S 17/18*** *(2020.01)*
***G01S 17/86*** *(2020.01)* ***G01S 17/894*** *(2020.01)*

(52) Cooperative Patent Classification (CPC):
**G01S 17/86; G01S 7/4863; G01S 17/18; G01S 17/894**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.07.2024 JP 2024119419**

(71) Applicant: **Canon Kabushiki Kaisha**
**Tokyo, 146-8501 (JP)**

(72) Inventor: **IKARI, Daiki**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

# (54) IMAGE CAPTURING APPARATUS AND IMAGE CAPTURING METHOD

(57) An image capturing apparatus includes at least one processor or circuit configured to function as color filters (30, 40), a light-emitting unit (501, 901) configured to emit light a plurality of times within one frame period, a sensor unit (102) configured to emit pulses according to a reception frequency of photons, a plurality of pixel units each including a counter (211) that counts the pulses and a memory (212) that stores a count value, and a count-enable generation unit (104) configured to generate a count enable signal. The count-enable generation unit (104) generates a first count enable signal that is asynchronous with an emission timing of the light-emitting unit (501, 901) and that includes a single enable period within one frame period, and/or a second count enable signal that is synchronous with the emission timing and that includes a plurality of enable periods within one frame period.

FIG. 9

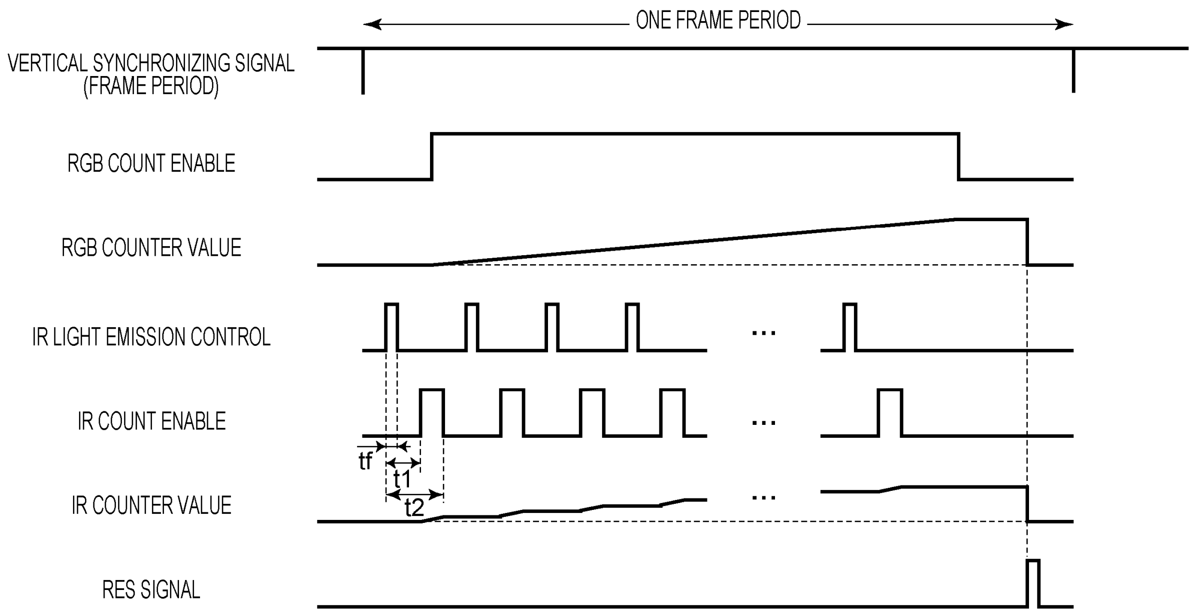


EP 4 685 517 A1

## Description

### TECHNICAL FIELD

The present disclosure relates to an image capturing apparatus and an image capturing method for generating count enable signals that vary depending on color filters to capture an RGB color image and a range-gated image.

### BACKGROUND

There is a known image capturing method using a camera called a range-gated camera. This is a technique that enables only an object located at a target distance to be clearly imaged, by emitting pulsed light at predetermined intervals in front of the camera and exposing an image sensor in the camera at a predetermined timing corresponding to the target distance. This technique is hereinafter referred to as range-gating control. This range-gating control enables an object located at a predetermined distance to be clearly imaged, for example, even in bad weather.

For example, International Publication No. WO17/110417 describes a technique for preventing an unnecessary target distance range from being imaged by adjusting the emission of pulsed light and the camera exposure timing with a timing controller. This patent literature also describes a configuration in which the emission of pulsed light and the camera exposure timing (delay time) are varied for each frame to capture images of multiple target distance ranges different in distance from the camera.

However, in the technique described in International Publication No. WO17/110417, the target distance range is varied for each frame, which requires a period of time corresponding to the multiple frames in order to image multiple distance ranges from the vicinity of the camera to a distant area. For this reason, if this technique is used for a latency-critical application such as collision avoidance, there is a possibility that the recognition of an object in front (e.g., a vehicle) using images may be delayed, resulting in a delay in taking a collision avoidance action (such as automatic braking).

Furthermore, since the image sensor in the camera is exposed at a predetermined timing corresponding to the target distance, the exposure time is limited to a time corresponding to the target distance. For this reason, the exposure time in a predetermined time tends to be shorter than the exposure time without the range-gating control. In this case, even if exposure is repeated, the total amount of light reflected from the object accumulated in the predetermined time is small. Therefore, it may be difficult to recognize an object in front from the image in a dark time zone in which the amount of reflected light per unit time is small such as at night.

### SUMMARY

The present disclosure is directed to an image capturing apparatus capable of capturing an image in a target distance range and also an image with high visibility of dark areas through range-gating control.

The present disclosure in its first aspect provides an image capturing apparatus as specified in claim 1. Optional features are specified in claims 2 to 17.

The present disclosure in its second aspect provides an image capturing method as specified in claim 18.

According to some embodiments of the present disclosure, an image capturing apparatus can be provided which is capable of simultaneously capturing a clear image of an object located at a predetermined distance even in bad weather and an image with high visibility of dark areas from short to long distances without a need for multiple frames.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating a configuration example of a photoelectric conversion element according to an embodiment of the present disclosure.

Fig. 2 is a diagram illustrating a configuration example of a sensor substrate.

Fig. 3 is a diagram illustrating a configuration example of color filters according to a first embodiment.

Fig. 4A is a diagram illustrating a configuration example of a circuit board.

Fig. 4B is a diagram illustrating a configuration example of the circuit board.

Fig. 5 is a diagram illustrating an equivalent circuit of a pixel in Fig. 2 and a signal processing circuit corresponding to the pixel.

Fig. 6 is a diagram schematically illustrating the relationship between the operation of an avalanche photodiode (APD) and the output signal.

Fig. 7 is a functional block diagram of an IR light emitter, a camera, and a mobile object according to the present embodiment.

Fig. 8 is a diagram illustrating the relationship between the travel of reflected light and the exposure timing according to the present embodiment.

Fig. 9 is a timing chart illustrating a control operation for emission and exposure within one frame period according to the first embodiment.

Fig. 10A is a diagram illustrating an example of an image displayed on a display unit according to the present embodiment.

Fig. 10B is a diagram illustrating an example of an image displayed on a display unit according to the present embodiment.

Fig. 10C is a diagram illustrating an example of an image displayed on a display unit according to the present embodiment.

Fig. 11 is a flowchart showing the details of an operation example according to the present embodiment.

Fig. 12 is a diagram illustrating a configuration example of color filters according to a second embodiment.

Fig. 13 is a diagram illustrating a configuration example of a visible-light emitter according to the second embodiment.

Fig. 14 is a timing chart illustrating a control operation for emission and exposure within one frame period according to the second embodiment.

## DESCRIPTION OF THE EMBODIMENTS

### First Embodiment

Embodiments of the present disclosure will be described hereinbelow with reference to the drawings. Note that the present disclosure is not limited to the following embodiments. In the drawings, identical or similar components or elements are denoted by the same reference signs, and redundant descriptions may be omitted or simplified.

Fig. 1 is a diagram illustrating a configuration example of a photoelectric conversion element according to an embodiment of the present disclosure. The following description is performed using an example in which a photoelectric conversion element 100 is a photoelectric conversion apparatus with a stacked structure in which two substrates, a sensor substrate 11 and a circuit board 21, are stacked and electrically connected to each other. However, a non-stacked structure in which a configuration included in the sensor substrate and a configuration included in the circuit board are disposed in a common semiconductor layer may be employed. The sensor substrate 11 includes a pixel area 12. The circuit board 21 includes a circuit area 22 that processes signals detected in the pixel area 12.

Fig. 2 is a diagram illustrating a configuration example of the sensor substrate 11. The pixel area 12 of the sensor substrate 11 includes multiple pixels 101 (pixel units) arrayed in multiple rows and columns in a two-dimensional pattern. Each pixel 101 includes a photoelectric conversion unit 102 including an avalanche photodiode (hereinafter referred to as an APD).

The photoelectric conversion unit 102 functions as a sensor unit that emits pulses at a frequency corresponding to the photon reception frequency. The numbers of rows and columns of the pixel array constituting the pixel area 12 may be any numbers.

Fig. 3 is a diagram illustrating a configuration example of color filters 30 of the pixels 101. Each of the pixels 101 in the pixel area 12 has one of the colors of the color filters 30. In other words, the color filters 30 have individual frequency characteristics. The color filters 30 are roughly divided into the following two types of filter. A first type of filter is RGB color filters 31, which include an R filter, a G filter, and a B filter that respectively transmit light having wavelengths corresponding to red (R), green (G), and blue (B). A second type of filter is an IR filter 32, which is an infrared filter that transmits light having a wavelength corresponding to infrared light (IR). Color filters with this configuration are referred to as RGB-IR filters. As shown in Fig. 3, of the set of color filters 30, a subset of the color filters 30 comprises IR filters.

Here, one pixel 101 corresponds to one of the R filter, the G filter, the B filter, and the IR filter. In the present embodiment, as illustrated in Fig. 3, columns in which B filters and G filters are alternately arranged and columns in which IR filters and R filters are alternately arranged are combined. The RGB color filters 31 and the IR filters 32 may be combined in any way.

Fig. 4A is a diagram illustrating a configuration example of the circuit board 21. The circuit board 21 includes signal processing circuits 103 that process electric charges that are photoelectrically converted by the photoelectric conversion units 102 in Fig. 2, a readout circuit 112, a control-pulse generation unit 115, a horizontal scanning circuit 111, vertical signal lines 113, a vertical scanning circuit 110, and an output circuit 114.

The vertical scanning circuit 110 receives control pulses supplied from the control-pulse generation unit 115 and sequentially supplies the control pulses to multiple pixels arrayed in the row direction. The vertical scanning circuit 110 employs logic circuits including, for example, shift registers and address decoders.

A signal output from the photoelectric conversion unit 102 of each pixel 101 is processed by a signal processing circuit 103. The signal processing circuit 103 includes a counter and a memory. The memory stores digital values. The horizontal scanning circuit 111 inputs control pulses to the signal processing circuits 103 to sequentially select each column in order to read signals from the memories of the pixels in which digital signals are stored.

The vertical signal lines 113 each receive signals from the signal processing circuits 103 of the pixels in the row selected by the vertical scanning circuit 110. The signals output to the vertical signal lines 113 are output outside the photoelectric conversion element 100 via the readout circuit 112 and the output circuit 114. The readout circuit 112 houses multiple buffers connected to the vertical signal lines 113.

As shown in Figs. 2 and 4A, the multiple signal processing circuits 103 are disposed in the area overlapping with the pixel area 12 in plan view. The vertical scanning circuit 110, the horizontal scanning circuit 111, the readout circuit 112, the output circuit 114, and the control-pulse generation unit 115 are arranged so as to overlap between an end of the sensor substrate 11 and an end of the pixel area 12 in plan view.

In other words, the sensor substrate 11 includes the pixel area 12 and a non-pixel area disposed around the pixel area 12. The vertical scanning circuit 110, the horizontal scanning circuit 111, the readout circuit 112, the output circuit 114, and the control-pulse generation unit 115 are arranged in an area overlapping with the non-pixel area in plan view.

The arrangement of the vertical signal lines 113, the readout circuit 112, and the output circuit 114 is not limited to the example shown in Fig. 4A. For example, the vertical signal lines 113 may be arranged to extend in the row direction, and the readout circuit 112 may be provided at the terminuses of the vertical signal lines 113. The signal processing circuit 103 is not necessarily provided for each of all the photoelectric conversion units 102. A single signal processing circuit may be shared by the multiple photoelectric conversion units 102 and may sequentially perform signal processing.

Fig. 4B is a diagram illustrating a configuration example of a count-enable generation unit 104 that generates signals to be supplied to the individual signal processing circuits 103 illustrated in Fig. 4A. In Fig. 4B, signal processing circuits 103r process light that has passed through the R filters of the RGB color filters 31 (i.e., a photoelectrically converted R signal). Similarly, signal processing circuits 103g process a G signal, and signal processing circuits 103b process a B signal. Signal processing circuits 103ir process light that has passed through the IR filters 32 (a photoelectrically converted IR signal).

The count-enable generation unit 104 generates count enable signals to be supplied to the counters in the signal processing circuits 103. The count enable signals are signals for controlling the enabling and disabling of the counters in the signal processing circuits 103. The count-enable generation unit 104 is configured to generate the count enable signals as different signals for the signal processing circuits 103 corresponding to the R signal, the G signal, the B signal, and the IR signal. In other words, the count enable signals to be supplied to the multiple R signal processing circuits 103r are generated by an R count-enable generation unit 104r. Similarly, the count enable signals to be supplied to the G signal processing circuits 103g and the B signal processing circuits 103b are generated by a G count-enable generation unit 104g and a B count-enable generation unit 104b, respectively. The count enable signals to be supplied to the multiple IR signal processing circuits 103ir are generated by an IR count-enable generation unit 104ir. The R count enable signals, the G count enable signals, the B count enable signals, and the IR count enable signals may be generated at independent timings. In Fig. 4B, the wiring connection between the signal processing circuits 103 and the count-enable generation unit 104 is omitted.

Fig. 5 is a diagram illustrating an equivalent circuit of a pixel 101 in Figs. 2 and 4A and the signal processing circuit 103 corresponding to the pixel 101.

An APD 201 included in the photoelectric conversion unit 102 generates charge pairs through photoelectric conversion in accordance with incident light. One of the two nodes of the APD 201 is connected to a power line to which a driving voltage VL (a first voltage) is supplied. The other of the two nodes of the APD 201 is connected to a power line to which a driving voltage VH (a second voltage) higher than the voltage VL is supplied.

In Fig. 5, one node of the APD 201 is an anode, and the other node of the APD 201 is a cathode. The anode and the cathode of the APD 201 are supplied with a reverse bias voltage such that the APD 201 operates in an avalanche multiplication mode. By supplying such a voltage, the charge pairs generated by incident light undergoes avalanche multiplication, resulting in the generation of an avalanche current.

There are two modes of operation when a reverse bias voltage is supplied: a Geiger mode, in which the voltage difference between the anode and the cathode is greater than the breakdown voltage; and a linear mode, in which the voltage difference between the anode and the cathode is near or below the breakdown voltage. The APD operated in the Geiger mode is referred to as a single photon avalanche diode (SPAD). In the case of the SPAD, for example, the voltage VL (the first voltage) is -30 V, and the voltage VH (the second voltage) is 1 V.

The signal processing circuits 103 each include a quenching element 202, a waveform shaping unit 210, a counter circuit 211, and a memory circuit 212. The quenching element 202 is connected to the power line to which the driving voltage VH is supplied and one of the anode and the cathode of the APD 201.

The quenching element 202 functions as a load circuit (a quenching circuit) during signal multiplication by avalanche multiplication, and serves to suppress the voltage to be supplied to the APD 201, thereby suppressing avalanche multiplication (a quenching operation). The quenching element 202 also functions to restore the voltage to be supplied to the APD 201 to the driving voltage VH by supplying a current corresponding to the voltage drop caused by the quenching operation (a recharging operation).

Fig. 5 illustrates an example in which the signal processing circuit 103 includes the waveform shaping unit 210, the counter circuit 211, and the memory circuit 212, in addition to the quenching element 202.

The waveform shaping unit 210 shapes a voltage change in the cathode of the APD 201, obtained during photon detection, and outputs a pulsed signal. One example of the waveform shaping unit 210 is an inverter circuit. Although Fig. 5 shows an example in which one inverter is used as the waveform shaping unit 210, a circuit in which multiple inverters are connected in series or another circuit having a waveform shaping effect may also be used.

The counter circuit 211 counts the number of pulses output from the waveform shaping unit 210 and holds the count value. When a control pulse RES is supplied via a drive line 213, the signal held in the counter circuit 211 is reset. The counter circuit 211 generates the signal based on the difference in count value between the start and the end of the accumulation period.

The counter circuit 211 is supplied with a count enable signal from the count-enable generation unit 104 illustrated in Fig. 4B. During a period in which the count enable signal is high (a count period), the counter circuit 211 counts the number of pulses output from the waveform shaping unit 210. During a period in which the count enable signal is low, the counter circuit 211 holds the count value without counting the number of pulses. This allows the count-enable generation unit 104, when implemented as a circuit operating at a clock frequency of 100 MHz, to control the high and low levels (i.e., enable and disable) in units of 10 nanoseconds (nsec), which corresponds to the clock period. Here, since the number of pulses output by the photoelectric conversion unit 102 in accordance with the photon reception frequency is counted only during a count-enable period, the pulse count-enable period can be regarded as the exposure period of the pixel 101. Thus, the present embodiment allows exposure on/off control in units of 10 nsec.

As illustrated in Fig. 4B, the count enable signals can be generated as different signals by the count-enable generation unit 104 for the R signal processing circuits 103r, the G signal processing circuits 103g, the B signal processing circuits 103b, and the IR signal processing circuits 103ir.

In the present embodiment, the count-enable generation unit 104 generates different count enable signals for the R signal processing circuits 103r, the G signal processing circuits 103g, and the B signal processing circuits 103b, and the IR signal processing circuits 103ir. The details of the generated signals will be described later with reference to a timing chart.

The memory circuit 212 is supplied with a control pulse SEL from the vertical scanning circuit 110 in Fig. 4A via a drive line 214 in Fig. 5 (not shown in Fig. 4A) and switches the electrical connection and disconnection between the counter circuit 211 and the vertical signal line 113. The memory circuit 212 functions as a memory that temporarily stores the count value of the counter and outputs a signal output from the counter circuit 211 of the pixel 101 to the vertical signal line 113.

The electrical connection may be switched using a switch such as a transistor provided between the quenching element 202 and the APD 201 or between the photoelectric conversion unit 102 and the signal processing circuit 103. Similarly, the supply of the voltage VH or the voltage VL to the photoelectric conversion unit 102 may be electrically switched using a switch such as a transistor.

Fig. 6 is a diagram schematically illustrating the relationship between the operation of the APD 201 and the output signal. The input side of the waveform shaping unit 210 is referred to as node A, and the output side is referred to as node B. A potential difference of VH - VL is applied to the APD 201 during the period from time t0 to time t1. When photons are incident on the APD 201 at time t1, avalanche multiplication occurs in the APD 201, an avalanche multiplication current flows through the quenching element 202, decreasing the voltage of node A.

When the voltage drop further increases and the potential difference applied to the APD 201 decreases, the avalanche multiplication of the APD 201 stops as at time t2, and the voltage level at node A no longer drops below a predetermined value. Thereafter, between time t2 and time t3, a current flows into node A to compensate for the voltage drop from voltage VL, and at time t3, node A settles to its original potential level. At that time, the portion of the output waveform at node A that exceeds a predetermined threshold is shaped by the waveform shaping unit 210 and then output as a pulsed signal at node B.

Next, an IR light emitter 500 and a camera 600, which constitute the image capturing apparatus of the present embodiment, and a mobile object 700 will be described. Fig. 7 is a functional block diagram of the IR light emitter 500, the camera 600, and the mobile object 700 according to the present embodiment. Some of the functional blocks illustrated in Fig. 7 are implemented by causing computers (not shown) included in the IR light emitter 500, the camera 600, and the mobile object 700 to execute computer programs stored in memories serving as storage media (not shown).

Alternatively, some or all of them may be implemented by hardware. Examples of the hardware include an application specific integrated circuit (ASIC) and processors (a reconfigurable processor and a digital signal processor [DSP]). The functional blocks illustrated in Fig. 7 need not be provided in the same casing and may be implemented by separate devices connected to each other via signal lines.

The camera 600 includes the photoelectric conversion element 100, described with reference to Figs. 1 to 6, an imaging optical system 601, an image processing unit 603, a recognition unit 604, a camera control unit 605, a storage unit 606, and a communication unit 607. The photoelectric conversion element 100 is constituted by an avalanche photodiode configured to photoelectrically convert an optical image, as described with reference to Figs. 1 to 6.

The image capturing apparatus according to the present embodiment (the camera 600 and the IR light emitter 500) is mounted on the mobile object 700. A camera unit, which includes the imaging optical system 601 and the photoelectric conversion element 100, is configured to capture, for example, at least one direction - front, rear, or side - of the mobile object. Multiple camera units may be mounted on the mobile object 700.

The image processing unit 603 performs image processing such as black level compensation, gamma curve adjustment, noise reduction, digital gain adjustment, demosaicing, and data compression on an image signal captured by the photoelectric conversion element 100 and generates a final image signal.

The image signals output from the photoelectric conversion element 100 are generated from light transmitted through the RGB color filters 31 and the IR filters 32 described with reference to Fig. 3, and thus correspond to an R signal, a G signal, a B signal, and an IR signal, respectively. The image processing unit 603 uses the R, G, and B signals among these signals to perform demosaicing and other processing to generate a color image (an RGB color image, or first image data). In other words, the image processing unit 603 generates image data from RGB pixel signals. At that time, the image processing unit 603 may perform white balance correction, color conversion, and other processing. At the same time, the image processing unit 603 uses the IR signal to generate an IR image (a monochrome image, or second image data). In other words, the image processing unit 603 generates image data from an IR pixel signal. Different image processing may be performed for color image generation and IR image generation.

The output from the image processing unit 603 is supplied to the recognition unit 604, the electronic control unit (ECU) 701 of the mobile object 700, and the camera control unit 605. The recognition unit 604 (a recognition processing unit) performs a process for recognizing surrounding people, vehicles, and other objects by performing image recognition based on the image signal. This recognition process uses deep learning. One preferable example of deep learning is You Only Look Once (YOLO), which allows easy learning and fast detection. Another example of deep learning is Single Shot MultiBox Detector (SSD). Still other examples include Faster Regional Convolution Neural Network (R-CNN), Fast R-CNN, and R-CNN.

In the present embodiment, the recognition unit 604 calculates the distance to a recognized object. There is a ranging method for estimating the distance by deep learning. One example is a method for calculating the distance by analyzing information on the detected object, such as a blurred image or by deep learning. Another method is a ranging method based on the principle of triangulation using a stereo camera as the image capturing apparatus. The recognition process including this distance estimation is executed for each of a color image and an IR image input from the image processing unit 603, and the recognition result is output to the ECU 701 located at the subsequent stage.

In the present embodiment, an automobile is used as an example of the mobile object 700. However, the mobile object may be any movable object, such as an aircraft, a train, a ship, a drone, an automated guided vehicle (AGV), or a robot.

The camera control unit 605 incorporates a CPU functioning as a computer and a memory that stores computer programs and controls the components of the camera 600 by the CPU executing the computer programs stored in the memory.

The camera control unit 605 functions as a control unit and controls, for example, the duration of the exposure period of each frame of the photoelectric conversion element 100 and the timing of the control signal via the count-enable generation unit 104 of the photoelectric conversion element 100.

Specifically, the camera control unit 605 transmits a reference signal repeatedly output to the count-enable generation unit 104 at predetermined intervals. The count-enable generation unit 104 generates a signal that repeats enabling and disabling at a predetermined timing using the reference signal as the reference of timing. The count-enable generation unit 104 can set the period from the reception of the reference signal until counting is enabled, the enable pulse width, the disable pulse width, the repetition period and repetition count of the enabling and disabling, and so on. When the camera control unit 605 sets predetermined values for the settings via control signals, a count enable signal is input to the counter circuit 211 at a predetermined timing based on the reference signal, and the pixel exposure period is controlled. This count enable signal can be generated as different signals for the respective signal processing circuits 103 for the R signal, the G signal, the B signal, and the IR signal using the count-enable generation unit 104, as illustrated in Fig. 4B.

The camera control unit 605 also transmits the same signal as the reference signal to the IR light emitter 500 via the communication unit 607. By also transmitting to the IR light emitter 500 the same reference signal as that transmitted to the photoelectric conversion element 100, the IR light emitter 500 can perform emission control based on the reference signal. This enables synchronization of the exposure timing of the photoelectric conversion element 100 with the emission timing of the IR light emitter 500.

The storage unit 606 includes, for example, recording media such as a memory card and a hard disk, and is capable of storing and reading image signals. The communication unit 607 includes wireless and wired interfaces, outputs the generated image signals outside the camera 600, and receives various external signals. In the present embodiment, the communication unit 607 is connected to the communication unit 503 of the IR light emitter 500 and also functions to transmit the above-described reference signal and transmit control commands from the camera control unit 605 to the IR light emitter 500.

The IR light emitter 500 includes an IR light emitting unit 501, a light-emission control unit 502, and a communication unit 503.

An example of the IR light emitting unit 501 is a near infrared light-emitting diode (LED) disposed in front of the mobile object 700, and includes a lens and a light-emitting unit. The light-emitting unit outputs pulsed light during a predetermined emission period in response to a pulsed signal output from the light-emission control unit 502. In other words, the light-emitting unit emits pulsed light a plurality of times within one frame period.

The light-emission control unit 502 receives the reference signal transmitted from the camera control unit 605 of the camera 600 via the communication unit 503, generates a pulsed signal at a predetermined timing based on the reference signal, and outputs the pulsed signal to the IR light emitting unit 501. Here, the light-emission control unit 502 can set the period from the reception of the reference signal until the pulsed signal is output, the pulse-on width, the pulse-off width, the repetition period from one pulse output to the next pulse output, the number of repetitions, and the like. When the camera control unit 605 sets a predetermined value in the light-emission control unit 502 via the communication unit 607 and the communication unit 503, the pulsed signal is output to the IR light emitting unit 501 at a predetermined timing based on the reference signal, whereby controlling the emission period of the IR light emitter 500. Thus, the emission of the light-emission control unit 502 is controlled based on the same signal as the reference signal input to the photoelectric conversion element 100.

The communication unit 503 communicates with the communication unit 607 of the camera 600 to receive configuration information and the reference signal for the light-emission control unit 502 from the camera control unit 605 and transmit them to the light-emission control unit 502.

The ECU 701 incorporates a CPU functioning as a computer and a memory that stores computer programs, and controls the components of the mobile object 700 by executing the computer programs stored in the memory with the CPU.

An output from the ECU 701 is supplied to the vehicle control unit 702 and the display unit 703. The vehicle control unit 702 functions as a movement control unit that performs driving, stopping, and direction control of the vehicle as the mobile object, based on the output of the ECU 701. The display unit 703 functions as a display unit, includes a display device such as a liquid crystal device or an organic electroluminescent device, and is mounted on the mobile object 700.

In the present embodiment, the ECU 701 receives information on the recognition result from the recognition unit 604 and is capable of executing vehicle stop control (for example, automatic braking) in accordance with the content of the recognition result. The ECU 701 also receives a color image and an IR image from the image processing unit 603 and transmits the images together with the recognition result to the display unit 703.

The display unit 703 displays to the driver of the mobile object 700 using, for example, a graphical user interface (GUI), various information on the images captured by the photoelectric conversion element 100, the recognition result by the recognition unit 604, the driving conditions of the vehicle based on the output of the ECU 701.

The image processing unit 603, the recognition unit 604, and so on in Fig. 7 need not be incorporated in the mobile object 700. For example, the image processing unit 603, the recognition unit 604, and so on may be provided at an external terminal, provided separately from the mobile object 700, for remote-controlling the mobile object 700 or monitoring the movement of the mobile object 700.

Fig. 8 is a diagram illustrating the relationship between the travel of light emitted from the IR light emitter 500 and its reflected light and the exposure timing of the camera 600. Fig. 8 illustrates a method for capturing an image of a target distance (a range-gated image) by performing range-gating control in which the emission timing and the exposure timing are synchronized in accordance with the target distance. A camera that captures a target-distance image through range-gating control in this manner is referred to as a range-gated camera. Fig. 8 shows distance on the horizontal axis and time on the vertical axis.

First, the horizontal axis will be described. There is fog 810 between distance x1 and distance x2, and there is a vehicle 820 at distance x3. In Fig. 8, a range-gated image within a range width R starting from a position at distance D is captured through range-gating control. In this case, the range width R corresponds to the target distance range to be imaged. At this time, the vehicle 820 is located within the range width R.

Next, the vertical axis will be described. Time 0 is defined as the timing at which emission from the IR light emitter 500 starts, and time tf is defined as the timing at which the emission ends. Accordingly, the emission period is tf. Time t1 is defined as the time at which exposure is started to capture a range-gated image within the range width R starting from the position at distance D, and time t2 is defined as the time at which the exposure ends. Time t1 corresponds to the timing at which light, emitted from the IR light emitter 500 at time 0, is reflected from the position located at distance D and returns to the camera 600. Time t2 corresponds to the timing at which light, emitted from the IR light emitter 500 at time tf, is reflected from a point located at the distance D plus the range width R and returns to the camera 600. Time t3 is defined as the timing at which the first light reflected by the fog 810 returns to the camera 600. Time t4 is defined as the timing at which the last light reflected by the fog 810 returns to the camera 600.

In the range-gating control, no exposure is performed during the period from time t3 to time t4 during which the light reflected by the fog 810 reaches the camera 600, and exposure is performed only during the period from time t1 to time t2 during which reflected light corresponding to the distance D plus the range width R reaches to the camera 600. This allows providing a clear image of the vehicle 820 by removing the fog 810.

Here, the time until reflected light from the object located at distance x returns to the camera 600 will be described. Time tr is defined as the timing at which light emitted at time 0 impinges on the object located at distance x and returns to the image capturing unit as reflected light. Here, the relationship between time tr at which the reflected light returns and the distance x from the image capturing target is expressed as Eq. 1:

$$\text{time tr} = 2x/\text{light velocity c (approximately } 3 \times 10\text{\^{}}8 \text{ m/s)} \cdots \text{Eq. 1}$$

As shown in Fig. 8, if the range width R from distance D is the image capturing range, exposure timing t1, which is the starting point of the range, is obtained using Eq. 2 by substituting distance D for distance x in Eq. 1.

$$\text{time t1} = 2D/\text{light velocity c} \cdots \text{Eq. 2}$$

Exposure timing t2, which is the end point of the range, is obtained using Eq. 3 by substituting distance D + range width R for distance x in Eq. 1 and adding time tf.

$$\text{time t2} = \text{tf} + 2(D + R)/\text{light velocity c} \cdots \text{Eq. 3}$$

Thus, by controlling time tr from light emission to exposure in accordance with the distance x to be imaged (target distance), range-gating control is achieved that enables clear imaging of an object located at the target distance, even when fog or the like is present between the camera and the target distance.

Fig. 9 is a timing chart illustrating a control operation for capturing a color image and a range-gated image per frame time (in one frame period). In the present embodiment, the range-gated image is captured by generating the above-described IR image through exposure synchronized with emission by the IR light emitter 500.

In Fig. 9, the vertical synchronizing signal indicates the frame period of image capturing, where the interval from one low pulse to the next low pulse corresponds to one frame period. Next, the waveform of the RGB count enable indicates the start and end timings of photon counting controlled by the count enable signals output from the R count-enable generation unit 104r, the G count-enable generation unit 104g, and the B count-enable generation unit 104b. The waveform of the RGB count enable is asynchronous with IR light emission control and is enabled only once during one frame period (a first count enable signal). The timing and duration of the enable interval within one frame period vary depending on the brightness of ambient visible light. The RGB counter value indicates the increase and decrease in the number of photons counted by the counter circuits 211 of the pixels on the RGB color filter 31 side. The IR light emission control indicates the emission timing of the IR light emitter 500. The IR count enable indicates the start and end timings of photon counting controlled by the count enable signal output from the IR count-enable generation unit 104ir. Since the IR light emission control is performed a plurality of times within one frame period, the waveform of the IR count enable is enabled a plurality of times within one frame period (a second count enable signal). The IR counter value indicates the increase and decrease in the number of photons counted by the counter circuit 211 of the pixels on the IR filter 32 side. The RES signal is a control pulse supplied to the counter circuit 211 via the drive line 213, and the pulse resets the count value held in the counter circuit 211.

First, RGB control for capturing a color image will be described. In this control, since the camera constantly receives reflected light of visible light, such as sunlight, the RGB counter value increases gradually from 0 during the period from the start to the end of the RGB count enable. The period from the start to the end of the RGB count enable corresponds to exposure time. After the RGB count enable ends, information on the RGB counter value is transmitted from the counter circuit 211 to the memory circuit 212, and the RGB counter value is reset by the RES signal. The exposure time from the start to the end of the RGB count enable is performed within one frame period.

Next, range-gating control for capturing a range-gated image will be described. In this control, the IR emission period is controlled in a pulsed manner by the light-emission control unit 502, and the photons are counted only for the reflected light of IR light from a specific range.

tf represents the emission period from the start to the end of emission, t1 represents the time from the start of emission to the start of photon counting, and t2 represents the time from the start of emission to the end of photon counting. Here, t1 represents the period during which the emitted light reaches a specific range and its reflected light returns to the camera 600. The time from t1 to t2 corresponds to the period during which the photons of the reflected light in a specific range is counted, and thus corresponds to the period from the start to the end of IR count enable.

The IR counter value increases according to the number of photons during the period from the start to the end of the IR count enable.

To perform accurate range-gating control, it is necessary to synchronize the emission start timing with the exposure start timing according to the range of the predetermined target distance. In the present embodiment, the synchronization is achieved by transmitting the same reference signal to the count-enable generation unit 104 and the light-emission control unit 502 with the camera control unit 605.

The period from the start of one emission to the start of the next emission, as illustrated in the IR light emission control on the timing chart corresponds to a range-gating operation cycle. The IR counter value counted in one range-gating operation cycle is held, and the IR counter value is incremented in the next range-gating operation cycle. The period from one emission to the next emission is set based on the time until reflected light is sufficiently attenuated and does not return to the camera 600.

As illustrated, the range-gating operation cycle is performed a predetermined plurality of times within one frame period, and information on the IR counter value that is last incremented within one frame period is transmitted from the counter circuit 211 to the memory circuit 212. Thereafter, the IR counter value is reset by the RES signal.

In the RGB control, since the exposure period is longer than that of range-gating control and photons are easily accumulated, a good color image can be captured even in a dark time zone, such as night, in which the amount of reflected light per unit time is small. Furthermore, since exposure control synchronized with emission, as in range-gating control, is not performed, reflected light can be captured regardless of distance, thereby allowing a color image to be obtained in which objects present at various distances are captured.

In contrast, in the range-gating control, since the exposure period is synchronized with the emission from the IR light emitter 500, a clear IR image can be captured for a target range, even in bad weather such as fog.

Thus, in the present embodiment, the count enable signals are separately generated for the pixels on the RGB color filter 31 side and the pixels on the IR filter 32 side. This allows a color image not subjected to range-gating control and an IR image subjected to range-gating control to be simultaneously captured.

Next, Figs. 10A to 10C are diagrams illustrating preferable effects obtained by using a color image and an IR image captured from the photoelectric conversion element 100 according to the present embodiment. The IR image is captured through exposure using the IR signal processing circuits 103ir while being synchronized with the emission timing of the IR light emitter 500. In the present embodiment, the camera 600 is attached to the front of the mobile object 700 and captures an image of an area in front of the travelling direction of the mobile object 700.

Fig. 10A is a diagram illustrating an example of a color image according to the present embodiment. In Fig. 10A, a pedestrian 830, fog 810, and the vehicle 820 are captured in the image. This color image is subjected to a recognition process by the recognition unit 604. The pedestrian 830 is detected by the recognition unit 604, and a pedestrian detection frame 831 is displayed. Since the recognition unit 604 performs distance estimation, the pedestrian detection frame 831 includes a numerical value indicating the distance to the detected object. In this example, the distance from the camera 600 to the pedestrian 830 is 5 meters.

Meanwhile, the vehicle 820 is present beyond the fog 810; however, the vehicle 820 is unclear in the color image because of the fog 810. For this reason, the vehicle 820 cannot be detected in the recognition process of the recognition unit 604. Since the color image is captured without being subjected to range-gating control in this manner, the vehicle 820 and the pedestrian 830 located at different distances can be captured in a single frame. Although the image can be captured as a color image suitable for display or notification, it is unclear in bad weather such as fog.

Next, Fig. 10B illustrates an example of an IR image according to the present embodiment. This image is captured through the range-gating control described with reference to the Figs. 8 and 9 described above. In Fig. 10B, the fog 810 and the vehicle 820 are captured in the image. In the present embodiment, the target distance captured in the range-gating control is set to approximately 40 meters from the camera 600. This target distance is set to a distance within which the mobile object 700 can be safely stopped in the event of an emergency braking operation. Accordingly, the target distance may be adaptively changed in accordance with the current speed and other relevant conditions of the mobile object 700. This configuration allows the mobile object 700 to be safely stopped after detecting the vehicle 820 without coming into collision with the vehicle 820. To ensure safe stopping, it is important that the camera 600 constantly monitors an area 40 meters ahead. In the present embodiment, since the vicinity of the mobile object 700, such as the surroundings of the mobile object 700, different from an area 40 meters ahead, can be monitored using the above-described color image, the camera 600 can be operated in a mode configured to constantly monitor an area 40 meters ahead.

This IR image is subject to a recognition process by the recognition unit 604. The vehicle 820 is detected by the recognition unit 604, and a vehicle detection frame 821 is displayed in the image. Since the recognition unit 604 performs distance estimation, the vehicle detection frame 821 includes a numerical value indicating the distance to the detected object. In this example, the distance from the camera 600 to the vehicle 820 is 40 meters. Since the IR image is captured through range-gating control, the fog 810 is attenuated, and the vehicle 820 can be captured as a clear image, thereby allowing the vehicle 820 to be detected even through the recognition process by the recognition unit 604.

Next, Fig. 10C illustrates an example of a warning image to be displayed to the driver of the mobile object 700 using the display unit 703. This image is generated by the ECU 701 based on Figs. 10A and 10B. In Fig. 10C, the entire image is based on Fig. 10A. Accordingly, the image of Fig. 10C is displayed as a color image. In Fig. 10C, the pedestrian detection frame 831, which is a result of the recognition process on the color image, and a vehicle detection frame 821, which is a result of the recognition process on the IR image, are superimposed one on another. This allows the driver, upon visually recognizing the image, to recognize the presence of the vehicle 820 beyond the fog 810 based on the vehicle detection frame 821. When the ECU 701 determines that the mobile object 700 needs emergency braking from the result of the recognition process, the ECU 701 instructs the vehicle control unit 702 to brake and displays a notification 840 to the driver of the mobile object 700. This allows the driver to properly recognize the execution of automatic braking.

In the present embodiment, a warning image is generated by superimposing, on a color image, an object detection result in which a color image is subjected to a recognition process and an object detection result in which an IR image is subjected to a recognition process. However, this is illustrative only; for example, the warning image may be generated by clipping out an image of a detection frame area in the IR image and combining the clipped image with the color image. This may attenuate the fog 810 on the warning image, thereby allowing the vehicle 820 to be displayed as a clear image.

In the present embodiment, the color image and the IR image are captured using a single camera, and the two images have matching angles of view. This allows generation of a composite image and integration of the detection results of the color image and the IR image on a single image, as illustrated in Fig. 10C, to be easily executed without a need for complicated calculation.

Fig. 11 is a flowchart showing the details of the operation according to the present embodiment. In this flowchart, the steps S101 to S107 are executed in sequence by executing computer programs stored in a memory with the CPU or the like, serving as a computer, in the camera control unit 605. The steps S201 to S206 are executed in sequence by executing computer programs stored in a memory with the CPU or the like, serving as a computer, in the ECU 701.

In step S101 of Fig. 11, the camera control unit 605 configures the IR light emitter 500.

Specifically, the camera control unit 605 performs, to the light-emission control unit 502 in the IR light emitter 500, settings, such as a pulse output width, an output period, a repetition period, and the number of repetitions, for generating a pulsed signal at a predetermined timing. They are configured in accordance with the target distance to be imaged in the range-gating control, as illustrated in Fig. 8.

Next, in step S102, the camera control unit 605 configures the photoelectric conversion element 100. Specific examples include various settings for photoelectrically converting the circuit board 21 in the photoelectric conversion element 100 from an optical image captured by the imaging optical system 601 to generate an image signal. In the present embodiment, particularly, the settings include a period for the count-enable generation unit 104 to generate a count enable signal, an enable pulse width, a repetition period, and the number of repetitions. These settings differ between the pixels on the RGB color filter 31 side and the pixels on the IR filter 32 side. In particular, for the pixels on the IR filter 32 side, the enable period of the IR count-enable generation unit 104ir are synchronized with the emission period of the IR light emitter 500. Thus, the IR pixels are subjected to range-gating control. In this step, parameter setting for the image processing unit 603 and the recognition unit 604 are completed.

Next, in step S103, the camera control unit 605 controls the camera 600 to start image capturing. Specifically, the camera control unit 605 issues an instruction to start emission to the IR light emitter 500, thereby starting light emission. Furthermore, the camera control unit 605 instructs the photoelectric conversion element 100 to output a vertical synchronizing signal to start exposure and generation of an image signal. As described above, the emission by the IR light emitter 500 and the exposure (count enable signal generation) by the photoelectric conversion element 100 are synchronously controlled based on the reference signal from the camera control unit 605, thereby enabling range-gating control.

Next, in step S104, the camera control unit 605 controls the image processing unit 603 to perform various image processing operations on the image signal output from the photoelectric conversion element 100, thereby generating a final image signal. Here, the camera control unit 605 generates a color image using an R signal (an R pixel signal), a G signal (a G pixel signal), and a B signal (a B pixel signal) output from the photoelectric conversion element 100 and generates an IR image using an IR signal.

Next, in step S105, the camera control unit 605 executes a recognition process on the color image and the IR image captured in step S 104 using the recognition unit 604. The recognition unit 604 detects objects such as a person and a vehicle in the image through the recognition process and estimates distances to the detected objects. In the present embodiment, since both a color image and an IR image captured through range-gating control are simultaneously captured, detection of an object in bad weather such as fog and detection of an object around the mobile object 700 can be simultaneously performed using a single frame.

Next, in step S106, the color image and the IR image captured in step S 104 and the recognition results of step S105 are transmitted to the ECU 701 in the mobile object 700.

The recognition results to be transmitted includes, for example, detected object name, information on the position and size of the detection frame, and distance information on the detected object.

In step S107, the camera control unit 605 determines whether there is a subsequent frame to be processed. If there is a subsequent frame to be processed, the process returns to step S104, and the processing continues; If there is no subsequent frame to be processed, the flowchart for the camera control unit 605 is terminated.

Next, the processes from step S201 to S206 executed by the CPU in the ECU 701 will be described below. In step S201, the ECU 701 determines whether an image and recognition results have been received. This is a process of receiving the data transmitted in step S106 described above. If an image and recognition results are received, the process proceeds to step S202.

Next, in step S202, the ECU 701 determines whether there is an object within a predetermined area in front of the camera 600. The predetermined range is, for example, a distance range nearer than a range within which the mobile object 700 can be safely stopped without coming into collision with the object in the event of an emergency braking operation. If it is determined that there is no object within the predetermined range, the process proceeds to step S204; if it is determined that there is an object within the predetermined range, the process proceeds to step S203.

Next, in step S203, the ECU 701 controls the vehicle control unit 702 to stop the mobile object 700. Thus, the collision between the object detected within the predetermined range and the mobile object 700 is avoided.

Next, in step S204, the ECU 701 generates an image to be displayed on the display unit 703. One example of this image is illustrated in Fig. 10C, which is generated by superimposing an object detection result in which a captured color image is subjected to a recognition process and an object detection result in which an IR image is subjected to a recognition process on the color image.

Next, in step S205, the image generated in step S204 is displayed on the display unit 703 to provide a notification to the driver of the mobile object 700. This allows the driver to recognize the object detection result and execution of automatic braking.

In step S206, the ECU 701 determines whether there is a subsequent frame to be processed. If there is a subsequent frame to be processed, the process returns to step S201, and the processing continues; If there is no subsequent frame to be processed, the flowchart for the ECU 701 is terminated.

In the present embodiment, a color image with high visibility of dark areas from short to long distances, captured with a sufficient exposure time, and an IR image in which an object located at a predetermined distance is clearly captured through range-gating control even in bad weather, can be simultaneously captured in a single frame.

There is also a so-called clock recharging type SPAD, in which avalanche multiplication occurs across the voltage applied to both ends of a photodiode inside a pixel, and after an external clock is input, a reverse bias voltage is applied to cause avalanche multiplication again. In this type, avalanche multiplication and counting (exposure) by the counter circuit can be stopped by stopping the supplied clock (clock gating).

In the present embodiment, counting (exposure) is stopped using the count enable signal. However, the clock recharging type SPAD may provide the same effects as those of the present embodiment by employing the clock gating described above. In this case, no avalanche multiplication occurs in a count-stopped state, thereby reducing power consumption.

## Second Embodiment

A second embodiment of the present disclosure will be described below.

In the first embodiment, a range-gating control method using a camera that performs exposure of IR light in synchronization of IR light emission is described. In the second embodiment, a case where range-gating control is performed using visible light instead of IR light will be described. The functional block diagram of the second embodiment is the same as that of Fig. 7 of the first embodiment and differs from the first embodiment only in the light emitter and the color filters in the camera.

Fig. 12 is a diagram illustrating a configuration example of color filters 40 of pixels 101 according to the second embodiment of the present disclosure. Each of the pixels 101 in the pixel area 12 has a color filter 40, that is, an R filter, a G filter, or a B filter that respectively transmits light having a wavelength corresponding to red (R), green (G), or blue (B). The G filter includes a G1 filter and a G2 filter, as illustrated. Color filters with this configuration are referred to as R-G1-G2-B filters.

Here, one pixel 101 corresponds to one of the R filter, the G1 filter, the G2 filter, and the B filter. The arrangement in the present embodiment is the Bayer arrangement, as illustrated in Fig. 12. However, this arrangement is illustrative only.

In the present embodiment, signal processing circuits that process light transmitted through the G1 filters of the color filters 40 (a photoelectrically converted G1 signal) and signal processing circuits that process light transmitted through the G2 filters (a photoelectrically converted G2 signal) differ. The count enable signals supplied thereto are also generated as different signals. This is because, in the same configuration as the configuration illustrated in Fig. 4B of the first embodiment, different count-enable generation units are provided for the signal processing circuits for the R signals, the G1 signals, the G2 signals, and the B signals, and the different count enable signals are wired. Thus, in the present embodiment, different exposure times can be set using the count enable signals from the respective signal processing circuits for the R signals, G1 signals, G2 signals, and B signals.

Fig. 13 is a diagram illustrating a configuration example of a visible-light emitter 900, a camera 600, and a mobile object 700 according to the second embodiment. The camera 600 and the mobile object 700 have the same configuration as that of the first embodiment, except the color filters 40 described above.

The visible-light emitter 900 includes a visible-light emitting unit 901, a light-emission control unit 902, and a communication unit 903.

In a preferable embodiment, the visible-light emitting unit 901 is a headlight module including one or more solid-state light-emitting devices, light-emitting diodes (LEDs), or organic LEDs (OLEDs). Accordingly, the visible-light emitting unit 901 has a function of emitting visible light, which can be seen by humans, to enable the driver of the mobile object 700 to obtain visual information in a dark environment such as at night or in a tunnel.

The light-emission control unit 902 receives the reference signal transmitted from the camera control unit 605 of the camera 600 via the communication unit 903, generates a pulsed signal at a predetermined timing based on the reference signal, and outputs the pulsed signal to the visible-light emitting unit 901. Here, the light-emission control unit 902 can set the period from the reception of the reference signal until the pulsed signal is output, the pulse-on width, the pulse-off width, the repetition period from one pulse output to the next pulse output, the number of repetitions, and the like. When the camera control unit 605 sets a predetermined value in the light-emission control unit 902 via the communication unit 607 and the communication unit 903, the pulsed signal is output to the visible-light emitting unit 901 at a predetermined timing based on the reference signal, whereby controlling the emission period of the visible-light emitter 900. Thus, the emission of the light-emission control unit 902 is controlled based on the same signal as the reference signal input to the photoelectric conversion element 100.

The communication unit 903 communicates with the communication unit 607 of the camera 600 to receive configuration information and the reference signal for the light-emission control unit 902 from the camera control unit 605 and transmit them to the light-emission control unit 902.

Fig. 14 is a timing chart illustrating a control operation for capturing a color image and a range-gated image captured using visible light per frame time. In the present embodiment, the range-gated image is captured through exposure synchronized with emission by the visible-light emitter 900.

In Fig. 14, the vertical synchronizing signal indicates the frame period of image capturing, where the interval from one low pulse to the next low pulse corresponds to one frame period. Next, the waveform of the R-G1-B count enable indicates the start and end timings of photon counting controlled by the count enable signals output from the count-enable generation unit 104 to the respective signal processing circuits for the R signal, G1 signal, and B signal. The R-G1-B counter value indicates the increase and decrease in the number of photons counted by the counter circuits 211 in the respective signal processing circuits for the R signal, G1 signal, and B signal. Since the R-G1-B counter value also includes the value of reflected light of emission from the visible-light emitter 900, the count value tends to be larger than that of the first embodiment. The visible-light emission control indicates the emission timing of the visible-light emitter 900. The G2 count enable indicates the start and end timings of photon counting controlled by the count enable signal output from the count-enable generation unit 104 to the signal processing circuit for the G2 signal. The G2 counter value indicates the increase and decrease in the number of photons counted by the counter circuit 211 in the signal processing circuit for the G2 signal.

First, R-G1-B control for capturing a color image will be described. In this control, the R-G1-B counter value increases gradually from 0 during the period from the start to the end of the R-G1-B count enable. The period from the start to the end of the R-G1-B count enable corresponds to exposure time. After the R-G1-B count enable ends, information on the R-G1-B counter value is transmitted from the counter circuit 211 to the memory circuit 212, and the R-G1-B counter value is reset by the RES signal. The exposure time from the start to the end of the R-G1-B count enable is performed within one frame period. The R signal, G1 signal, and B signal thus generated are subjected to demosaicing by the image processing unit 603, thereby generating a color image (an RGB image, or the first image data).

Next, range-gating control for capturing a range-gated image using visible light according to the second embodiment will be described. In this control, the visible-light emission period is controlled in a pulsed manner by the light-emission control unit 902, and the photons are counted only for the reflected light of visible light from a specific range. Accordingly, the present embodiment is effective in an environment with low ambient light, such as at night.

Timing control of light emission and exposure (G2 count enable) for range-gating control is the same as the timing control in the first embodiment, in which the timing at which visible light emission is started and the timing at which exposure is started are synchronized in accordance with the range of a predetermined target distance.

The visible-light emitter 900 according to the second embodiment may be a headlight module. In this case, visible light emission is controlled to be continued regardless of whether exposure is performed, in other words, whether the G2 count enable is activated, in order to perform not only the range-gating control but also to assist the visibility of the driver of the mobile object 700.

The temporal resolution of the human eye is approximately 50 to 100 msec, and blinking light with a period shorter than this time is perceived as continuous illumination. For this reason, even when pulsed light emission on the order of nanoseconds is repeated as in the present embodiment, it is not perceived as flickering by the human eye, and does not hinder the driver's visibility. Providing average light output corresponding to a continuous light source allows for achieving a light source level corresponding to the continuous light source. Thus, the range-gating control can be achieved without hindering the driver's visibility in an environment with little ambient light.

As illustrated, the range-gating operation cycle is performed a predetermined plurality of times within one frame period, and information on the G2 counter value that is last incremented within one frame period is transmitted from the counter circuit 211 to the memory circuit 212. Thereafter, the G2 counter value is reset by the RES signal. The G2 signal generated in this manner is processed by the image processing unit 603 separately from the R signal, G1 signal, and B signal, thereby generating a monochrome image (second image data) using only the G2 signal.

In the R-G1-B control, since the exposure period is longer than that of range-gating control and photons are easily accumulated, a good color image can be captured even during dark conditions, such as night, in which the amount of reflected light per unit time is small. Furthermore, since exposure control synchronized with emission, as in range-gating control, is not performed, reflected light can be captured regardless of distance, thereby allowing a color image to be obtained in which objects present at various distances are captured.

In contrast, in the range-gating control, since the exposure period is synchronized with the emission from the visible-light emitter 900, a clear G2 image (monochrome image) can be captured for a target range, even in bad weather such as fog.

Thus, in the present embodiment, the count enable signal is separately generated for each of the R-G1-B pixels and the G2 pixels. This allows a color image not subjected to range-gating control and a G2 image (monochrome image) subjected to range-gating control to be simultaneously captured.

When this camera is mounted on the vehicle, it becomes unnecessary to mount the IR light emitter. By controlling an LED headlight module pre-installed in the vehicle as the visible-light emitter 900, range-gating control can be achieved, thereby reducing the cost of installing a separate IR light emitter, as compared to the first embodiment.

Having described the present disclosure in detail based on preferable embodiments, it is to be understood that the present disclosure is not limited to the specific embodiments, ant that various modifications are included in the present disclosure without departing from the scope of the disclosure. Some of the present embodiments may be combined as appropriate.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

Various embodiments have been described in detail above but it will be understood that the present disclosure is not limited to these embodiments and encompasses all modifications, variants, alternatives, and equivalents falling within the scope of the appended claims.

## Claims

**1.** An image capturing apparatus comprising:
at least one processor or circuit configured to function as:

a plurality of color filters (30, 40), each configured to transmit light with a respective specific wavelength;
a light-emitting unit (501, 901) configured to emit, a plurality of times within one frame period, light having a wavelength corresponding to a frequency characteristic of the color filters (30, 40);
a sensor unit (102) configured to emit pulses in accordance with a reception frequency of photons of light transmitted through each color filter (30, 40);

a plurality of pixel units each including a counter (211) configured to count the pulses and a memory (212) configured to store a count value of the counter (211); and
a count-enable generation unit (104) configured to generate a count enable signal that controls a count period of the counter (211),
wherein the count-enable generation unit (104) generates a first count enable signal that is asynchronous with an emission timing of the light-emitting unit (501, 901) and that includes a single enable period within one frame period, and/or a second count enable signal that is synchronous with the emission timing of the light-emitting unit (501, 901) and that includes a plurality of enable periods within one frame period.

2. The image capturing apparatus according to claim 1, wherein the count-enable generation unit (104) generates the count enable signal based on the emission timing of the light-emitting unit (501, 901) and a target distance range of an image capturing target.

3. The image capturing apparatus according to claim 1, wherein the count-enable generation unit (104) generates the count enable signal as different signals for the pixel units corresponding to the color filters (30, 40) and generates the count enable signal as a signal that is synchronous with the emission timing of the light-emitting unit (501, 901) for pixel units corresponding to a subset of the color filters (30, 40).

4. The image capturing apparatus according to claim 3,

wherein the light-emitting unit (501) emits infrared, IR, light,
wherein a subset of the color filters (30) comprises IR filters, and
wherein the count-enable generation unit (104) generates the count enable signal as a signal that is synchronous with the emission timing of the light-emitting unit (501) and supplies the signal to pixel units corresponding to the IR filters.

5. The image capturing apparatus according to claim 4, wherein the color filters (30) comprise RGB-IR filters.

6. The image capturing apparatus according to claim 1, further comprising:
an image processing unit configured to generate first image data from a pixel signal generated in response to the count enable signal that is asynchronous with the emission timing of the light-emitting unit (501, 901) and generate second image data from a pixel signal generated in response to the count enable signal that is synchronous with the emission timing of the light-emitting unit (501, 901).

7. The image capturing apparatus according to claim 6, wherein the first image data is a color image, and the second image data is a monochrome image.

8. The image capturing apparatus according to claim 6, further comprising:
a recognition processing unit configured to perform a recognition process on the first image data and the second image data.

9. The image capturing apparatus according to claim 8, wherein recognition results of the first image data and the second image data by the recognition processing unit are superimposed on the first image data.

10. The image capturing apparatus according to claim 8, wherein a composite image of the first image data and the second image data is generated based on the recognition results of the first image data and the second image data by the recognition processing unit.

11. The image capturing apparatus according to claim 3,

wherein the light-emitting unit (901) emits visible light, and
wherein the count-enable generation unit (104) generates the count enable signal as a signal that is synchronous with the emission timing of the light-emitting unit (901) and supplies the signal to a subset of the pixel units corresponding to the color filters (40).

12. The image capturing apparatus according to claim 11,

wherein the color filters (40) comprise R-G1-G2-B filters, and

wherein the count-enable generation unit (104) supplies the count enable signal as a signal that is synchronous with the emission timing of the light-emitting unit (901) to pixel units corresponding to the G1 or G2 filters.

**13.** The image capturing apparatus according to claim 12, further comprising:
an image processing unit configured to generate first image data from (a) one of a G1 pixel signal and a G2 pixel signal, (b) an R pixel signal, and (c) a B pixel signal generated in response to the count enable signal that is asynchronous with the emission timing of the light-emitting unit (901), and generate second image data from another of the G1 pixel signal and the G2 pixel signal generated in response to the count enable signal that is synchronous with the emission timing of the light-emitting unit (901).

**14.** The image capturing apparatus according to claim 13, wherein the first image data is a color image, and the second image data is a monochrome image.

**15.** The image capturing apparatus according to claim 13, further comprising:
a recognition processing unit configured to perform a recognition process on the first image data and the second image data.

**16.** The image capturing apparatus according to claim 15, wherein recognition results of the first image data and the second image data by the recognition processing unit are superimposed on the first image data.

**17.** The image capturing apparatus according to claim 15, wherein a composite image of the first image data and the second image data is generated based on the recognition results of the first image data and the second image data by the recognition processing unit.

**18.** An image capturing method for an image capturing apparatus comprising:

a plurality of color filters (30, 40) each configured to transmit light with a respective specific wavelength;
a light-emitting unit (501, 901) configured to emit, a plurality of times within one frame period, light having a wavelength corresponding to a frequency characteristic of the color filters (30, 40);
a sensor unit (102) configured to emit pulses in accordance with a reception frequency of photons of light transmitted through each color filter (30, 40);
a plurality of pixel units each including a counter (211) configured to count the pulses and a memory (212) configured to store a count value of the counter (211); and
a count-enable generation unit (104) configured to generate a count enable signal that controls a count period of the counter (211),
wherein the count-enable generation unit (104) generates a first count enable signal that is asynchronous with an emission timing of the light-emitting unit (501, 901) and that includes a single enable period within one frame period, and/or a second count enable signal that is synchronous with the emission timing of the light-emitting unit (501, 901) and that includes a plurality of enable periods within one frame period.

FIG. 1

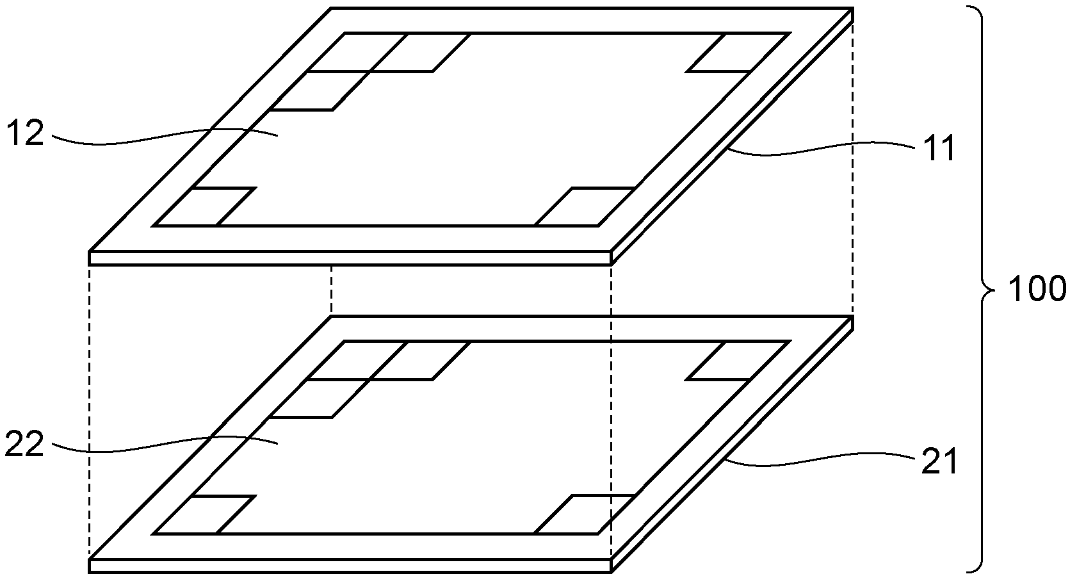

FIG. 2

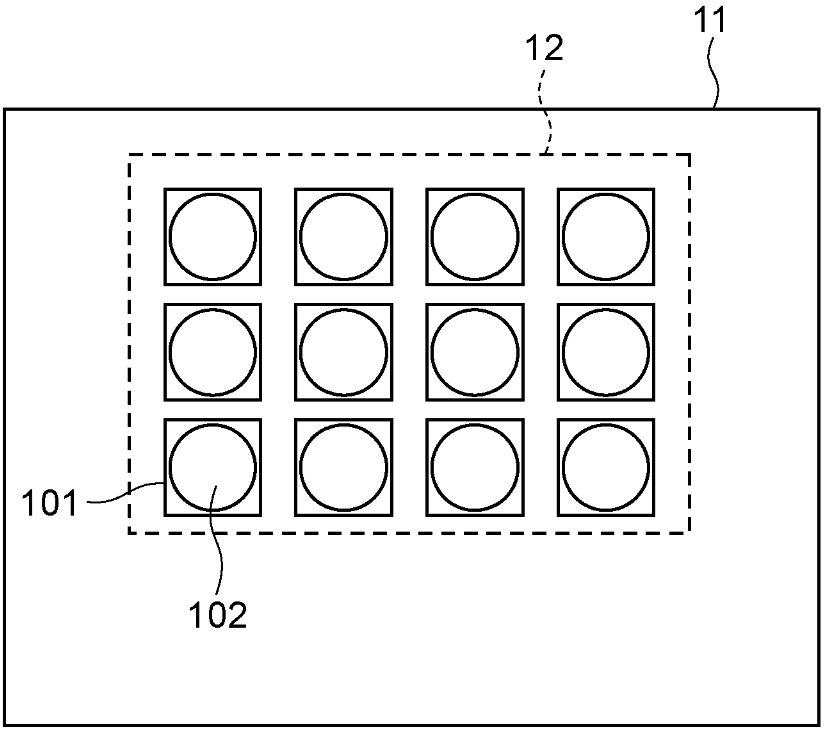

FIG. 3

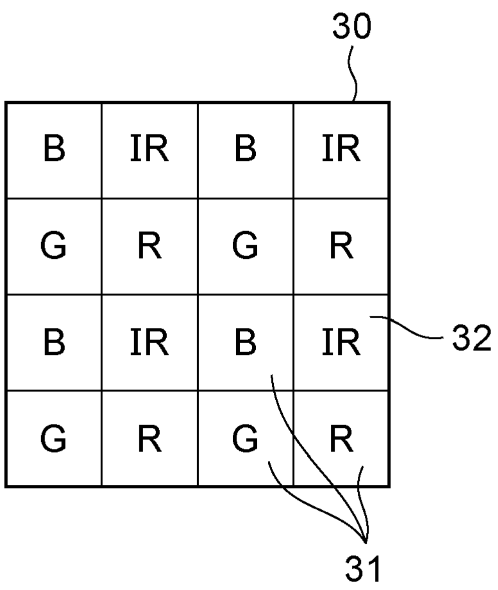

FIG. 4A

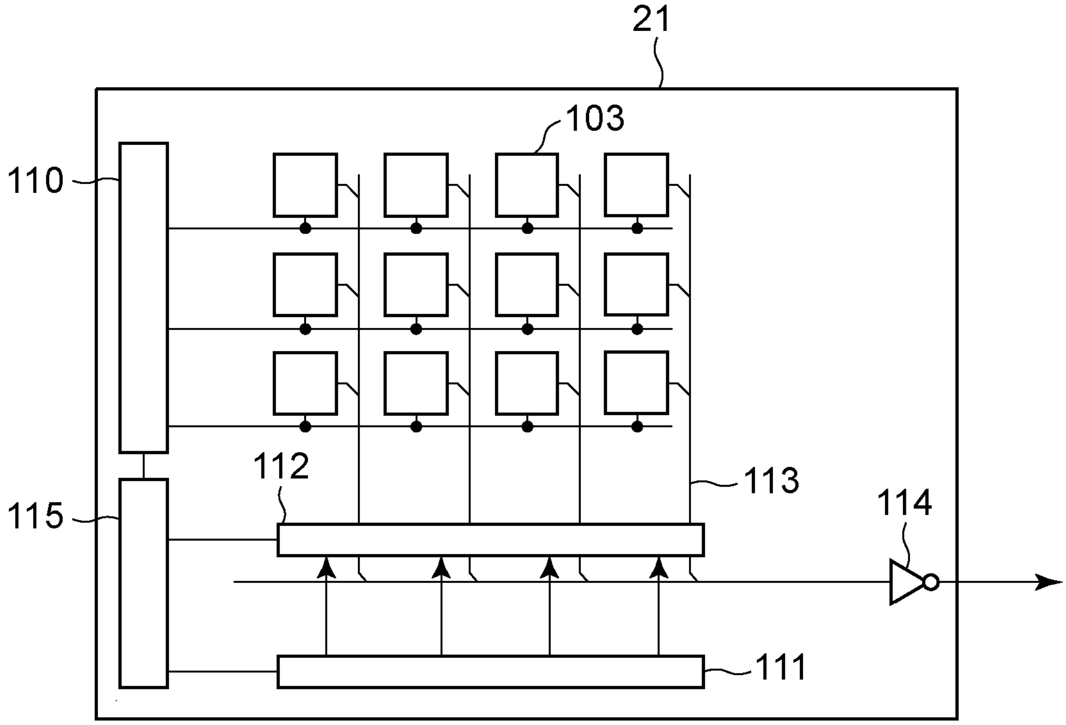
21
103
110
112
113
114
115
111

FIG. 4B

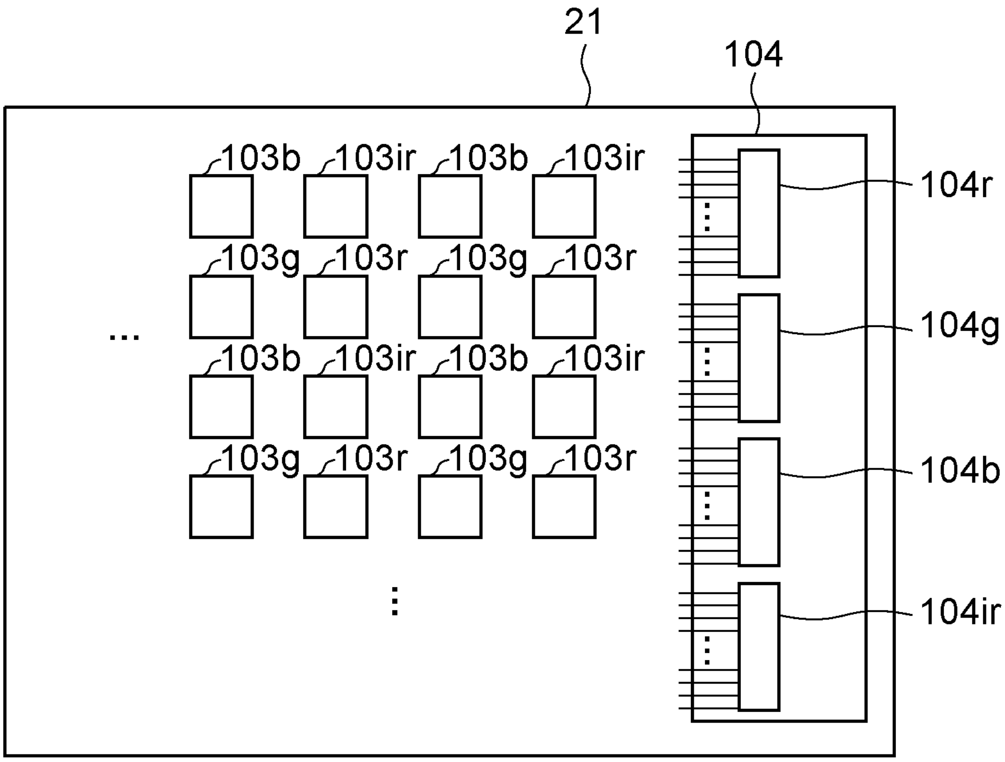
21
104
103b
103ir
103b
103ir
104r
103g
103r
103g
103r
104g
103b
103ir
103b
103ir
103g
103r
103g
103r
104b
104ir

FIG. 5

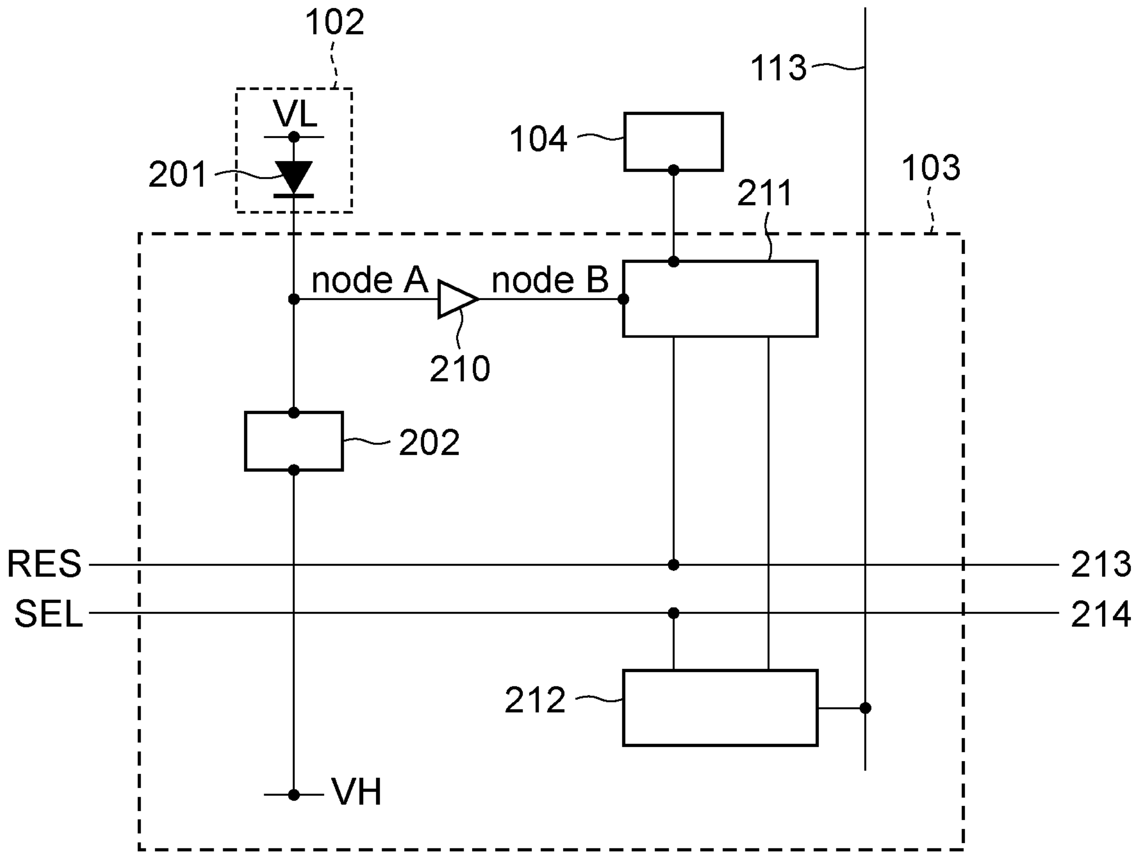
102
VL
201
104
113
103
211
node A
node B
210
202
RES
SEL
213
214
212
VH

FIG. 6

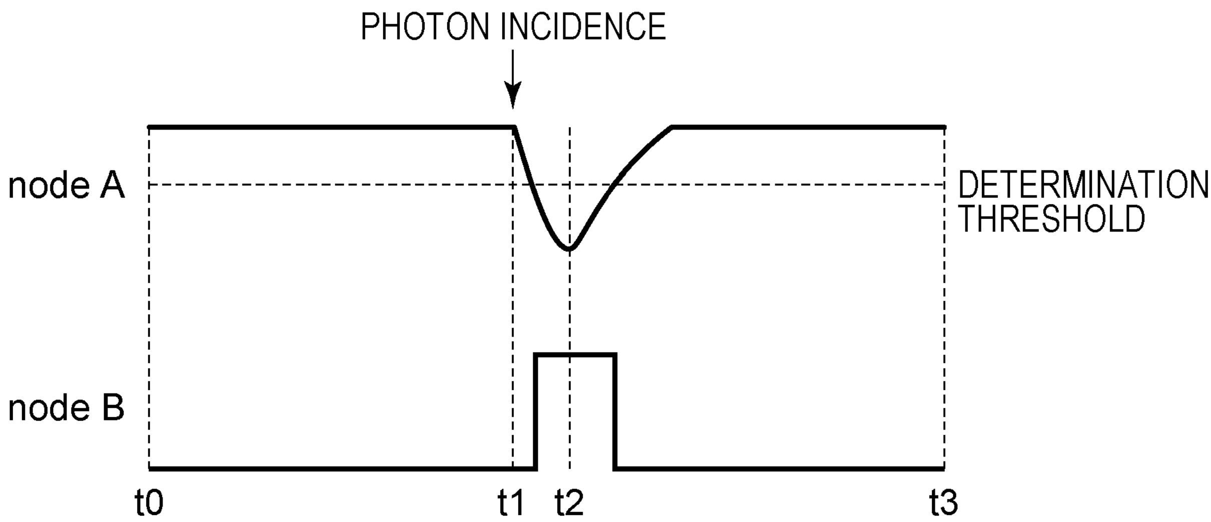
PHOTON INCIDENCE
node A
DETERMINATION THRESHOLD
node B
t0
t1
t2
t3

FIG. 7

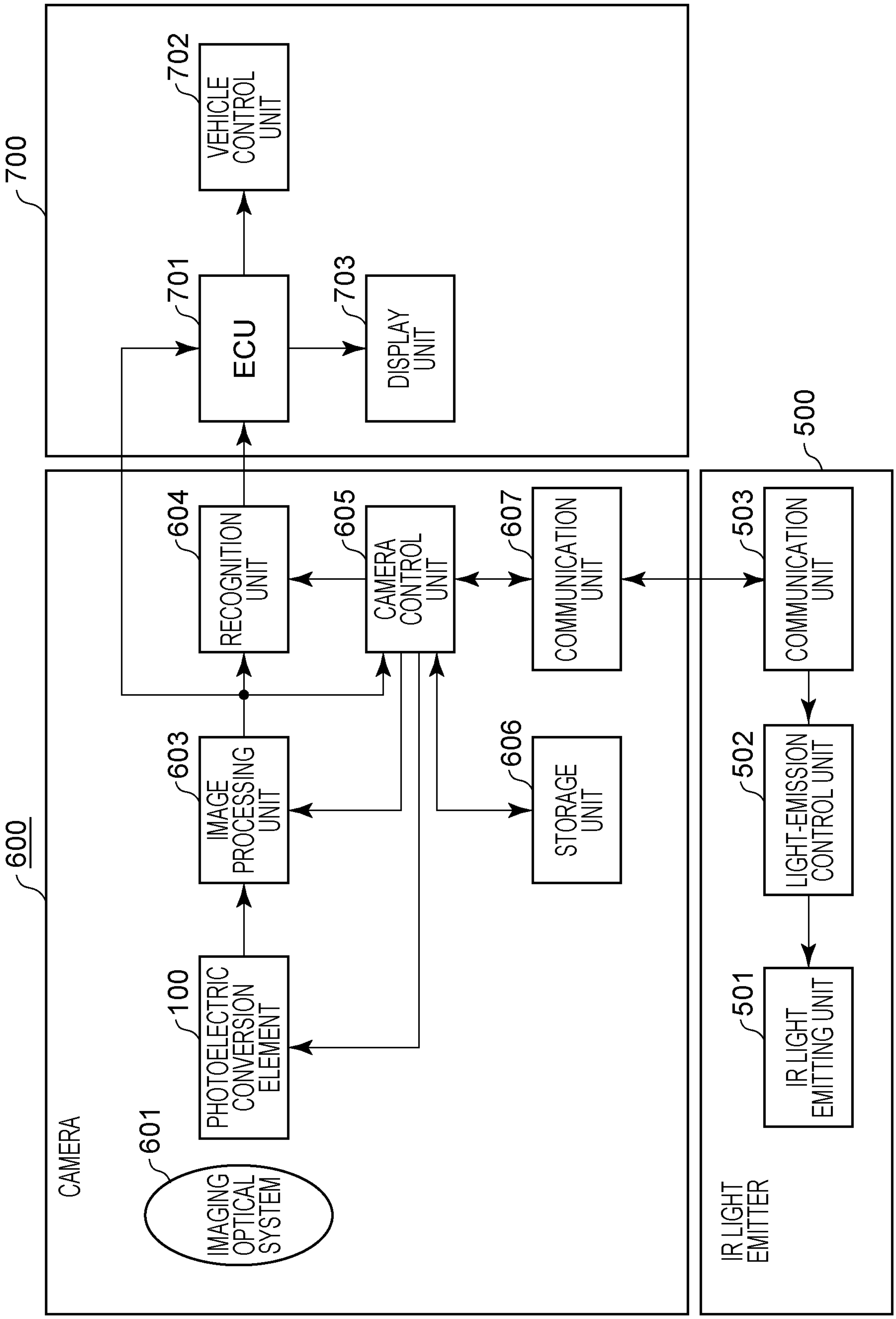
700
701
ECU
702
VEHICLE CONTROL UNIT
703
DISPLAY UNIT
600
CAMERA
601
IMAGING OPTICAL SYSTEM
100
PHOTOELECTRIC CONVERSION ELEMENT
603
IMAGE PROCESSING UNIT
604
RECOGNITION UNIT
605
CAMERA CONTROL UNIT
606
STORAGE UNIT
607
COMMUNICATION UNIT
500
IR LIGHT EMITTER
501
IR LIGHT EMITTING UNIT
502
LIGHT-EMISSION CONTROL UNIT
503
COMMUNICATION UNIT

FIG. 8

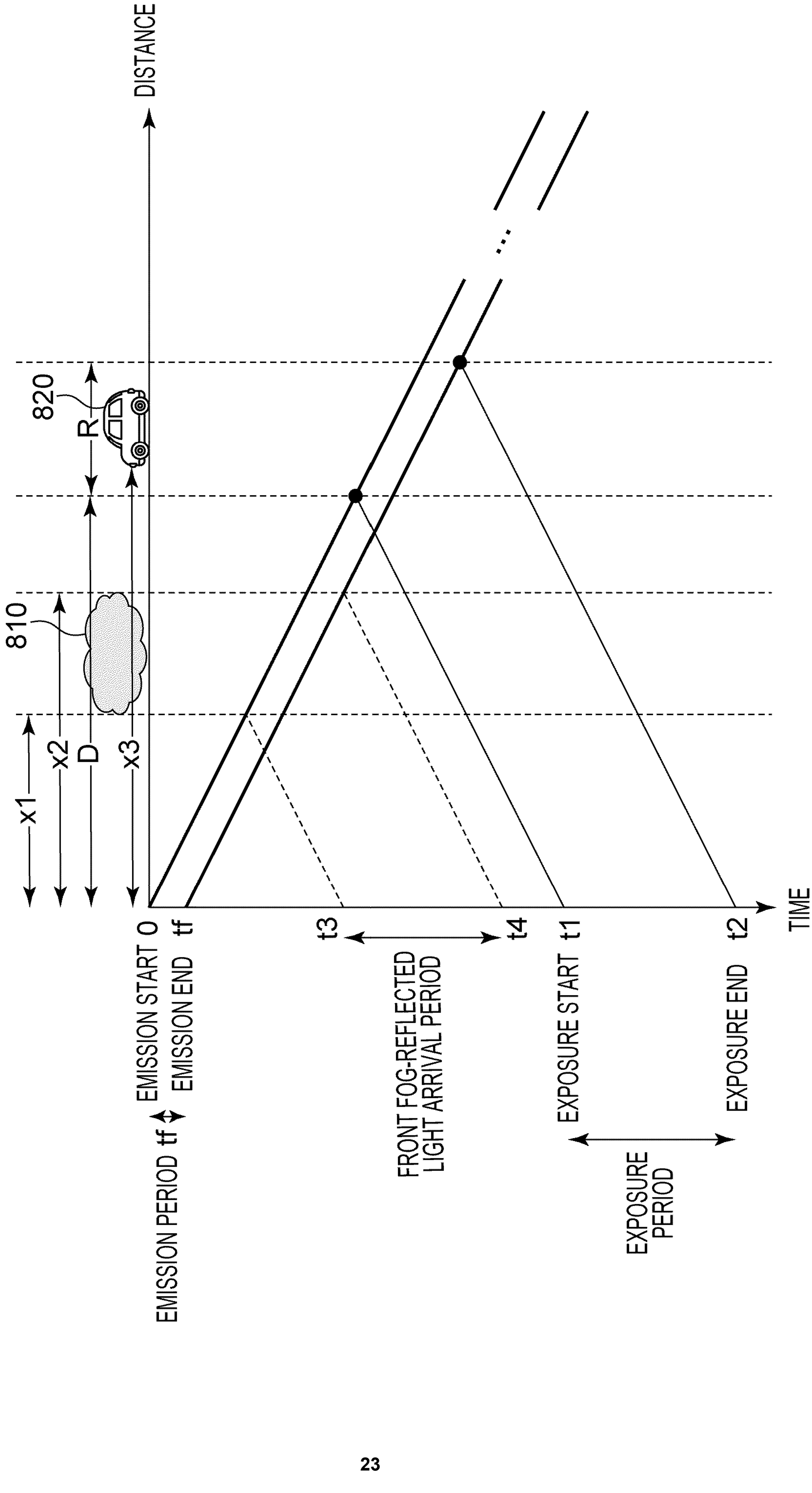
DISTANCE
TIME
810
820
x1
x2
D
x3
R
EMISSION START 0
EMISSION END tf
t3
t4
t1
t2
EMISSION PERIOD tf
FRONT FOG-REFLECTED LIGHT ARRIVAL PERIOD
EXPOSURE START
EXPOSURE END
EXPOSURE PERIOD

FIG. 9

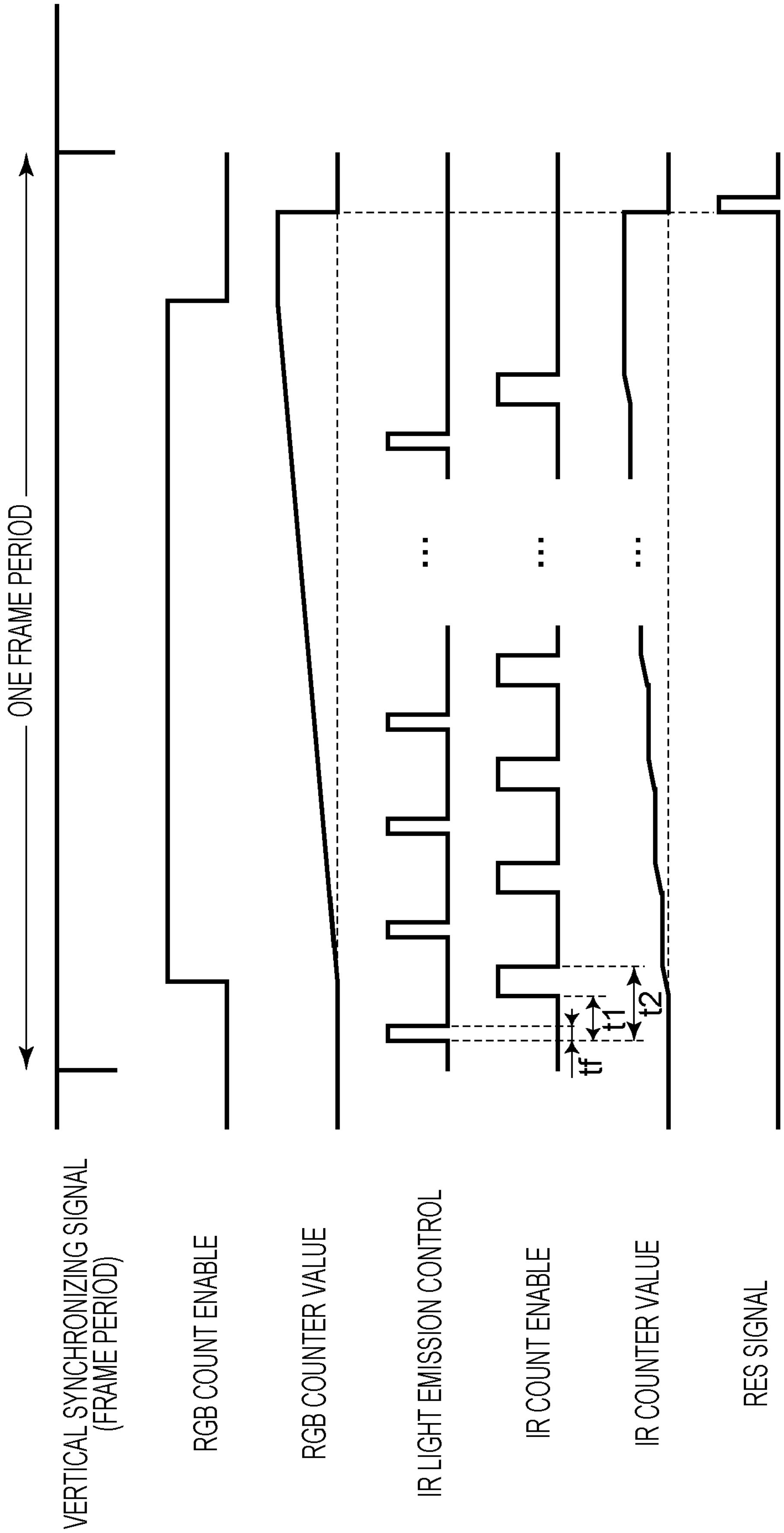
ONE FRAME PERIOD
tf
t1
t2
VERTICAL SYNCHRONIZING SIGNAL (FRAME PERIOD)
RGB COUNT ENABLE
RGB COUNTER VALUE
IR LIGHT EMISSION CONTROL
IR COUNT ENABLE
IR COUNTER VALUE
RES SIGNAL

FIG. 10A

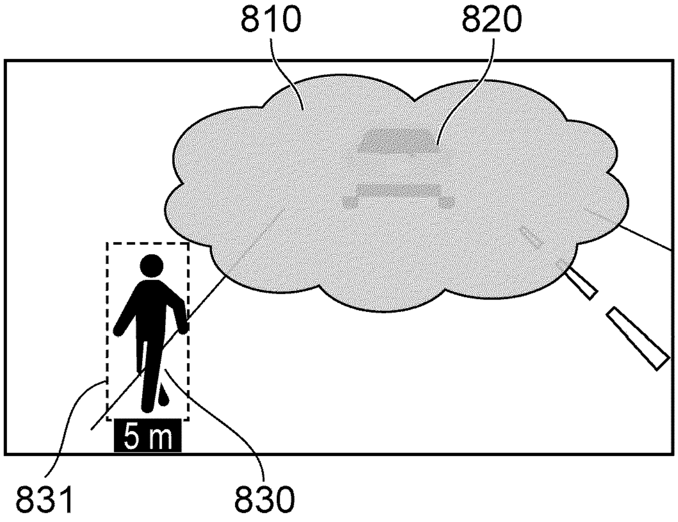


FIG. 10B

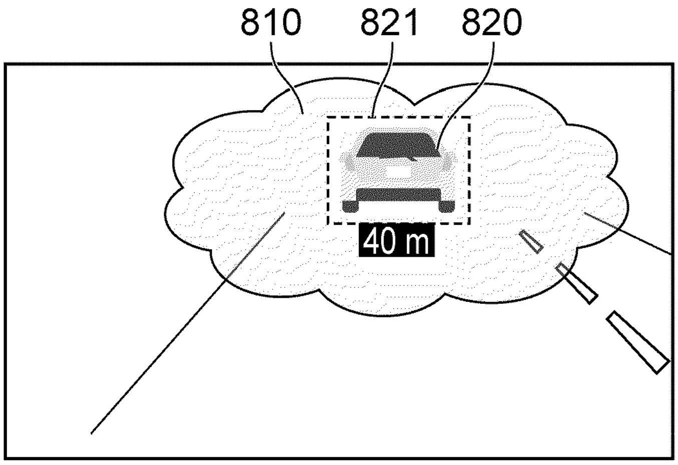


FIG. 10C

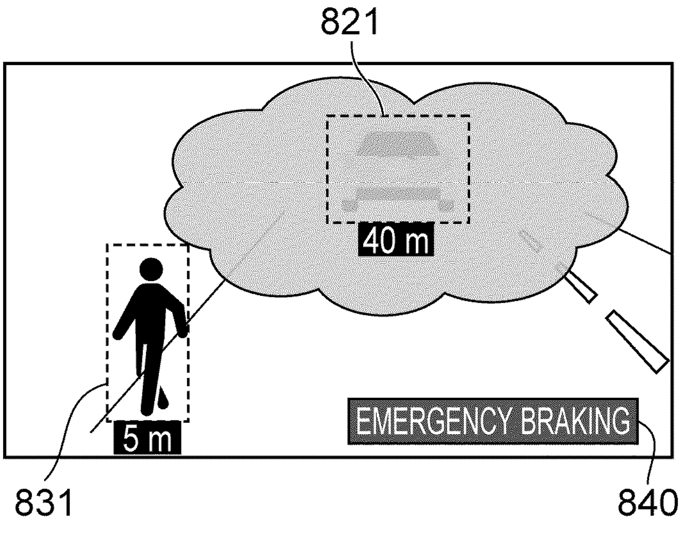

FIG. 11

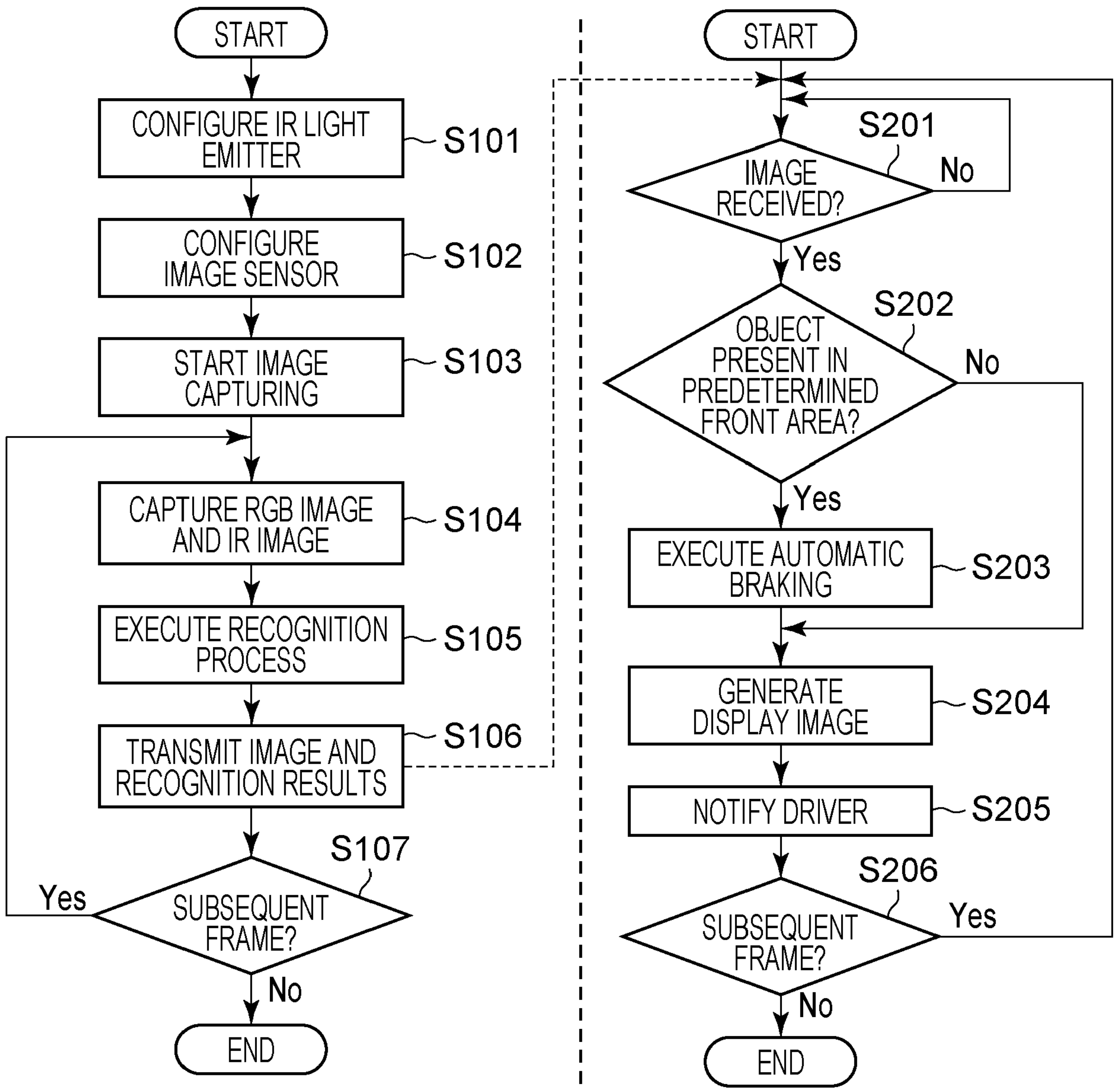
START
CONFIGURE IR LIGHT EMITTER
S101
CONFIGURE IMAGE SENSOR
S102
START IMAGE CAPTURING
S103
CAPTURE RGB IMAGE AND IR IMAGE
S104
EXECUTE RECOGNITION PROCESS
S105
TRANSMIT IMAGE AND RECOGNITION RESULTS
S106
S107
SUBSEQUENT FRAME?
Yes
No
END
START
S201
IMAGE RECEIVED?
No
Yes
S202
OBJECT PRESENT IN PREDETERMINED FRONT AREA?
No
Yes
EXECUTE AUTOMATIC BRAKING
S203
GENERATE DISPLAY IMAGE
S204
NOTIFY DRIVER
S205
S206
SUBSEQUENT FRAME?
Yes
No
END

FIG. 12

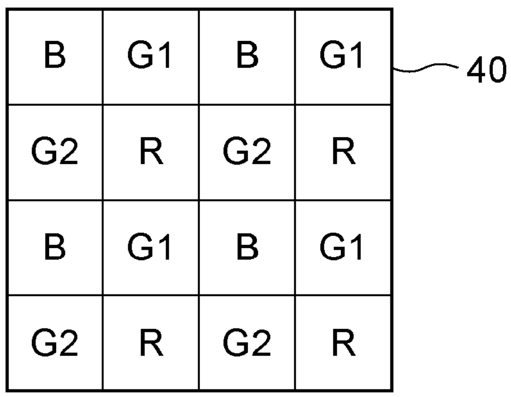

FIG. 13

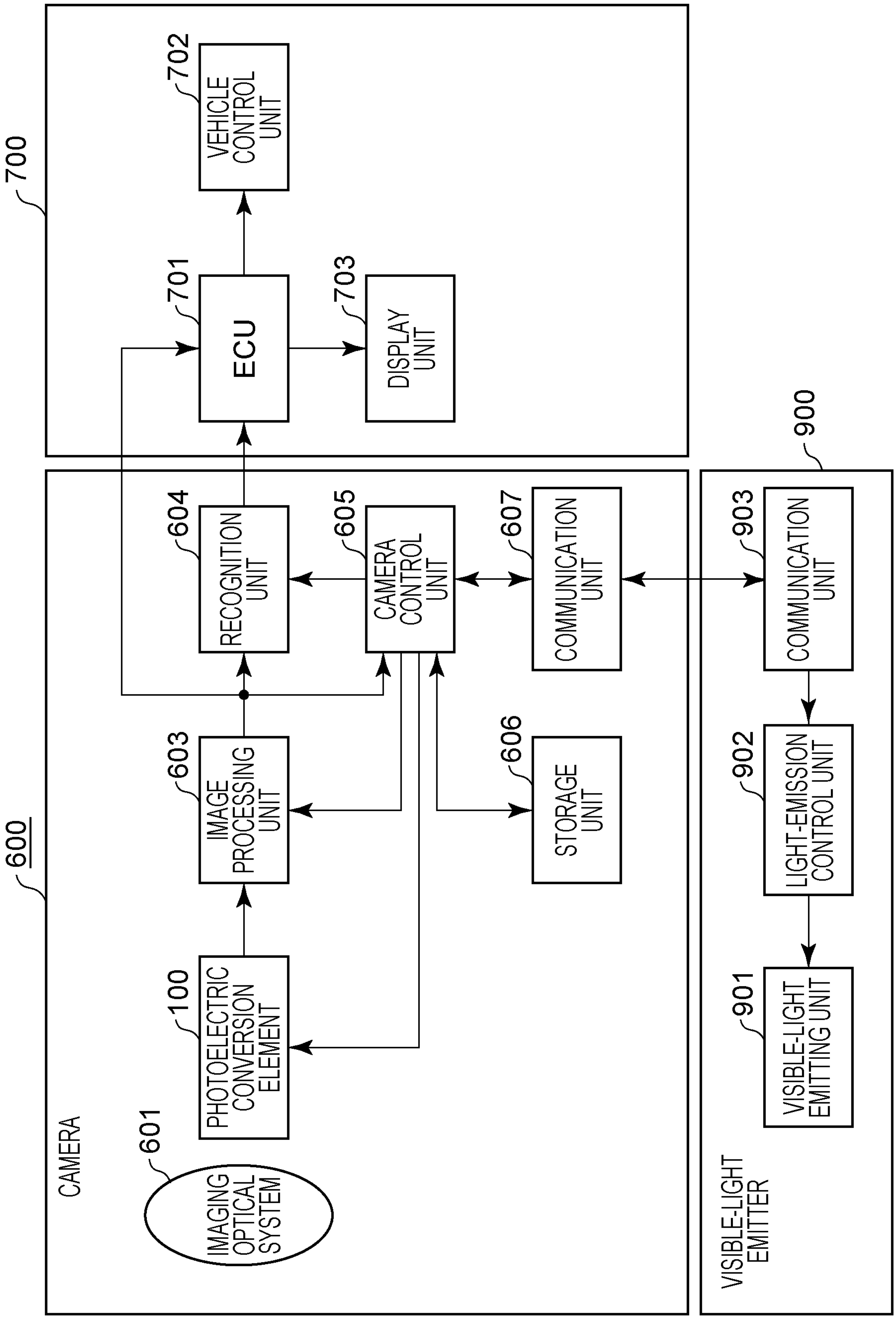
700
702
VEHICLE CONTROL UNIT
701
ECU
703
DISPLAY UNIT
600
CAMERA
601
IMAGING OPTICAL SYSTEM
100
PHOTOELECTRIC CONVERSION ELEMENT
603
IMAGE PROCESSING UNIT
604
RECOGNITION UNIT
605
CAMERA CONTROL UNIT
606
STORAGE UNIT
607
COMMUNICATION UNIT
900
VISIBLE-LIGHT EMITTER
901
VISIBLE-LIGHT EMITTING UNIT
902
LIGHT-EMISSION CONTROL UNIT
903
COMMUNICATION UNIT

FIG. 14

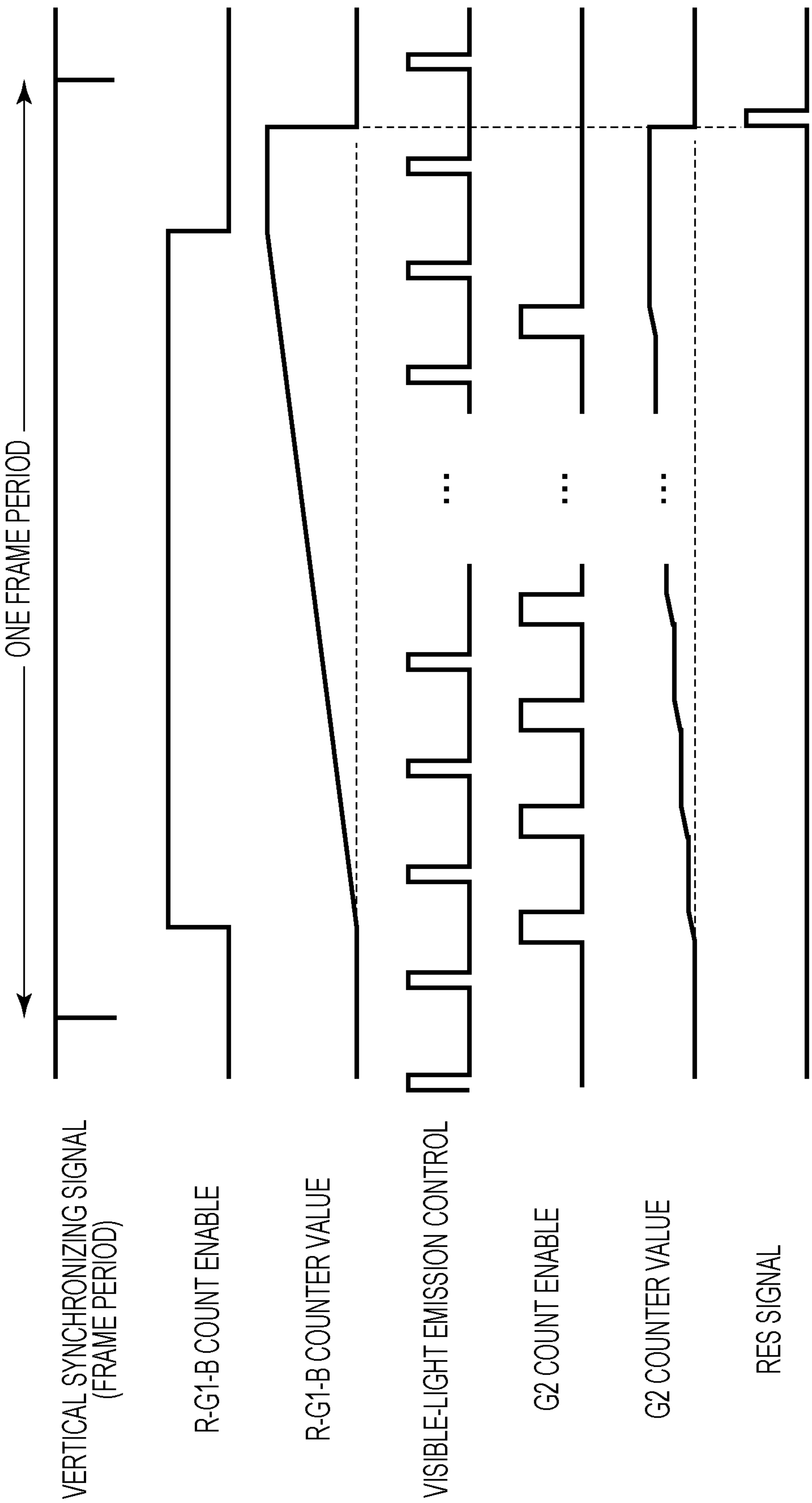
ONE FRAME PERIOD
VERTICAL SYNCHRONIZING SIGNAL (FRAME PERIOD)
R-G1-B COUNT ENABLE
R-G1-B COUNTER VALUE
VISIBLE-LIGHT EMISSION CONTROL
G2 COUNT ENABLE
G2 COUNTER VALUE
RES SIGNAL

Europäisches Patentamt
European Patent Office
Office européen des brevets

# EUROPEAN SEARCH REPORT

Application Number
EP 25 18 9181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/068908 A1 (KOBAYASHI HIROKAZU [JP] ET AL) 28 February 2019 (2019-02-28)<br>* paragraphs [0001], [0004] - [0007], [0027] - [0109] *<br>* figures 1-9 *<br>----- | 1-18 | INV.<br>G01S7/4863<br>G01S17/18<br>G01S17/86<br>G01S17/894 |
| A | US 2024/210531 A1 (TANEMOTO SHUN [JP] ET AL) 27 June 2024 (2024-06-27)<br>* paragraphs [0007] - [0016], [0046] - [0230] *<br>* figures 1-29 *<br>----- | 1-18 | |

TECHNICAL FIELDS SEARCHED (IPC)

G01S

The present search report has been drawn up for all claims

1

| Place of search | Date of completion of the search | Examiner |
|---|---|---|
| Munich | 18 November 2025 | Kruck, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 18 9181

This annex lists the patent family members relating to the patent documents cited in the above-mentioned European search report. The members are as contained in the European Patent Office EDP file on
The European Patent Office is in no way liable for these particulars which are merely given for the purpose of information.

18-11-2025

| Patent document cited in search report | Publication date | Patent family member(s) | Publication date |
|---|---|---|---|
| US 2019068908 A1 | 28-02-2019 | CN 109429024 A | 05-03-2019 |
| | | EP 3451655 A1 | 06-03-2019 |
| | | KR 20190024744 A | 08-03-2019 |
| | | US 2019068908 A1 | 28-02-2019 |
| US 2024210531 A1 | 27-06-2024 | JP WO2022230760 A1 | 03-11-2022 |
| | | US 2024210531 A1 | 27-06-2024 |
| | | WO 2022230760 A1 | 03-11-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 17110417 A